# EUROPÄISCHE PATENTSCHRIFT

(11) **EP 3 008 218 B1**
(45) Veröffentlichungstag und Bekanntmachung des Hinweises auf die Patenterteilung: **09.08.2017**
(21) Anmeldenummer: 14730814.2
(22) Anmeldetag: 05.06.2014
(51) Int. Cl.: C21B 5/06, C21B 7/00

(54) **HOCHOFEN UND VERFAHREN ZUM BETRIEB EINES HOCHOFENS**
BLAST FURNACE AND METHOD FOR OPERATING A BLAST FURNACE
HAUT FOURNEAU ET PROCÉDÉ SERVANT À FAIRE FONCTIONNER UN HAUT FOURNEAU

(30) Priorität: 14.06.2013 DE 102013009993
(43) Veröffentlichungstag der Anmeldung: 20.04.2016
(73) Patentinhaber: CCP Technology GmbH, 81675 München (DE)
(72) Erfinder: KÜHL, Olaf, 17489 Greifswald (DE)
(74) Vertreter: Klang, Alexander H.
(86) Internationale Anmeldenummer: PCT/EP2014/061725
(87) Internationale Veröffentlichungsnummer: WO 2014/198635

(56) Entgegenhaltungen:
- EP-A1- 0 931 840
- EP-A1- 2 543 743
- WO-A1-2010/049536
- WO-A1-2011/087036
- GB-A- 1 247 417
- US-A- 2 598 735
- US-A- 3 884 677
- US-A- 3 909 446

## Beschreibung

Die vorliegende Erfindung bezieht sich auf einen Hochofen und ein Verfahren zum Betrieb eines Hochofens, durch deren Einsatz der CO₂-Ausstoß verringert werden kann.

Hüttenwerke sind seit vielen Jahren bekannte Industrieanlagen zur Aufbereitung von Metallerzen, welche als zentrales Bauteil einen Hochofen aufweisen. Ein Hochofen wird mit Einsatzstoffen beschickt, welche Metallerz und Zuschlagsstoffe, sowie Heizstoffe aufweisen. Als Heizstoffe werden zumeist Kohle oder Koks verwendet, welche einerseits durch Verbrennung unter Luftzufuhr Wärme erzeugen und andererseits auch als Reduktionsmittel für das Metallerz wirken, das größtenteils als Metalloxid vorliegt. Beim Reduzieren von Metallerzen in dem Hochofen entstehen verschiedene Gase, die gemeinsam als Gichtgas bezeichnet werden, wobei das Gichtgas eine beträchtliche Menge an Kohlendioxid (CO₂) enthält. Kohlendioxid ist ein Treibhausgas, und in den letzten Jahren werden verstärkt Versuche unternommen, Treibhausgase zu vermeiden bzw. umzuwandeln, da diese als schädlich für das Weltklima angesehen werden.

Bei der Metallverhüttung besteht ein allgemeines Bestreben, möglichst wenig Einsatzstoffe und Heizstoffe zu verwenden, weil deren Einkauf und Transport teuer ist. Es gibt viele Bemühungen, den Einsatz von Koks/Kohle zu reduzieren. Dazu gehören das Einblasen von Kohlestaub genauso wie die Erzeugung von Kohlenmonoxid als Reduktionsgas entweder im Hochofen oder in einem separaten Vergasungsreaktor außerhalb des Hochofens. Es ist beispielweise aus EP 09318401 A1 bekannt, eine Teilmenge des für die Reduktion des Metallerzes erforderlichen Kohlenstoffs als Ersatzreduktionsmittel in den Hochofen einzublasen. Als Ersatzreduktionsmittel können beispielsweise Erdgas, Schweröl, Feinkohle und ähnliche Stoffe mit hohem Kohlenstoffgehalt verwendet werden. Diese Stoffe können direkt in den Hochofenschacht eingeblasen werden oder außerhalb des Hochofens in einem separaten Vergasungsreaktor zu einem Reduktionsgas vergast werden. Dieses Reduktionsgas kann dann in den Hochofenschacht eingeleitet werden. Das Verfahren aus EP 09318401 A1 bietet zwar eine Einsparung der Kohle- bzw. Koksmenge und kann auch schwierig zu behandelnde Stoffe als Ersatzreduktionsmittel nutzbar machen, jedoch wird das Problem des hohen CO₂-Ausstoßes bei der Metallverhüttung nicht gelöst.

Aus dem Stand der Technik sind Prozesse bekannt, bei denen Gichtgas oder ein einzelner Bestandteil davon aus einem Hochofenschacht abgeleitet und nach Behandlung in einem CO₂-Konverter wieder in den Hochofenschacht geleitet wird. EP 2 543 743 A1 offenbart einen Prozess bei dem Gichtgas aus einem Hochofenschacht abgeleitet und zunächst zu einer Trennvorrichtung geleitet wird, in der CO und CO₂ getrennt werden. Nur das abgeschiedene CO₂ wird einer Reformierung in einem CO₂-Konverter unterworfen. Durch die Reformierung entstehen hauptsächlich CO und H₂O, wobei H₂O abgeschieden wird und CO in den Hochofenschacht geleitet wird. WO 2011/087036 A1 offenbart ebenfalls einen Prozess bei dem Gichtgas zuerst zu einer Trennvorrichtung geleitet wird, in der CO und CO₂ getrennt werden. In einem CO₂-Konverter wird das CO₂ durch Elektrolyse in O₂ und CO umgewandelt. Das CO aus der Umwandlung und das zuvor abgetrennte CO werden gemeinsam in den Hochofenschacht eingeleitet. US 3 909 446 A offenbart einen Prozess bei dem Gichtgas aus einem Hochofenschacht in einem CO₂-Konverter mit Kokereigas vermischt wird. Dabei entsteht ein Gasgemisch aus CO und H₂, welches als Reduktionsmittel wieder in den Hochofenschacht eingeleitet wird. Ein ähnlicher Prozess wird in WO 2010/049536 A1 beschrieben, wobei dort auch noch kohlenstoffhaltigen Partikeln als Reduktionsmittel wieder in den Hochofenschacht eingeleitet werden. US 2 598 735 A offenbart einen Prozess, bei dem Gichtgas aus einem Hochofenschacht in einem Gasgenerator mit Kohlenstoff/Kohle und Sauerstoff vermischt wird. Dabei wird ein Teil des Kohlenstoffes in Anwesenheit von Sauerstoff verbrannt, und ein anderer Teil reduziert das CO₂ aus dem Gichtgas und das CO₂ aus der Verbrennung von Kohlenstoff zu CO. Dieses CO wird als Reduktionsmittel wieder in den Hochofenschacht eingeleitet. Keines der Dokumente offenbart einen Prozess, bei dem eine Weiterverarbeitung eines Teils des umgewandelten CO erfolgt.

Die vorliegende Erfindung ist darauf gerichtet, einen Hochofen und ein Verfahren zum Betrieb eines Hochofens zu schaffen, welche dazu geeignet sind, den CO₂-Ausstoß sowie die Menge der Zuschlagsstoffe und Heizstoffe im Vergleich zu derzeit verwendeten Hüttenwerken zu verringern. Die Aufgabe wird gelöst durch einen Prozess zum Aufbereiten von Metallerzen nach Anspruch 1 und durch einen Hochofen zur Metallgewinnung nach Anspruch 8.

Der hier beschriebene Prozess zum Aufbereiten von Metallerzen weist folgende Schritte auf: Reduktion eines Metallerzes, insbesondere eines Metalloxids; Erzeugen von Gichtgas, das CO₂ enthält, in einem Hochofenschacht; Ableiten des Gichtgases aus dem Hochofen; Leiten von wenigstens einem Teil des Gichtgases direkt oder indirekt zu einem CO₂-Konverter und Reduzieren des im Gichtgas enthaltenen CO₂ zu CO in dem CO₂-Konverter; und Leiten eines ersten Teils des CO aus dem CO₂-Konverter in den Hochofenschacht. Neben der Lösung der oben genannten Aufgabe wird durch den Prozess CO als gasförmiges Reduktionsmittel erzeugt, welches leicht in den Hochofenschacht einzubringen ist. Weiter wird bei dem Prozess ein zweiter Teil des CO aus dem CO₂-Konverter zu einem Weiterverarbeitungsprozess geleitet. Je nach Ausgestaltung des CO₂-Konverters fällt bei der Umwandlung des CO₂ mehr CO an, als im Hochofenschacht zur Reduktion von Metallerz benötigt wird. Das zusätzlich anfallende CO kann so in einem Weiterverarbeitungsprozess als Rohstoff oder Energieträger verwendet werden. Der Weiterverarbeitungsprozess ist einer oder mehrere der Folgenden Umwandlungsprozesse: Gemäß einer Ausführung ist der Weiterverarbeitungsprozess ein Oxidationsprozess in einer Brennstoffzelle oder ein Verbrennungsprozess in einem Gasmotor oder einer Gasturbine. Mittels dieser Prozesse kann Wärme oder mechanische Leistung aus dem brennbaren CO-Gas gewonnen werden. Gemäß einer weiteren Ausführung ist der Weiterverarbeitungsprozess ein biologischer Umwandlungsprozess in einem Biokonverter und läuft unter Einsatz von Mikroben oder Algen nach einer oder mehreren der folgenden Netto-Gleichungen ab: a) 6CO + 3 H₂O → C₂H₅OH + 4 CO₂; b) 6 H₂ + 2CO₂ → C₂H₅OH + 3 H₂O; c) 2 CO + 4 H₂ → C₂H₅OH + H₂O. So kann CO und insbesondere das unerwünschte CO₂ durch Zugabe von Wasserstoff in Ethanol umgewandelt werden. Bei geeigneter Wahl der Mikroben oder Algen kann auch Kerosin, Diesel, Ottokraftstoff, Methanol oder ein anderer Treibstoff erzeugt werden. Bei dieser Ausführung ist der Weiterverarbeitungsprozess ein biologischer Umwandlungsprozess in einem Biokonverter, und unter Einsatz von Mikroben oder Algen erfolgt eine Umwandlung der eingeleiteten Gase CO und CO₂ zu Kerosin, Diesel, Ottokraftstoff, Methanol oder einen anderen Treibstoff als Produkt. Gemäß einer anderen Ausführung ist der Weiterverarbeitungsprozess ein Umwandlungsprozess, bei dem ein Synthesegas in einen funktionalisierten und/oder nicht-funktionalisierten Kohlenwasserstoff umgewandelt wird, vorzugsweise in Paraffin, Kerosin, Diesel, Ottokraftstoff, Flüssiggase oder Methanol. So kann aus dem in großen Mengen anfallenden CO-Gas ein verkaufsfähiges Produkt gewonnen werden. Wenn bei dem Prozess mehr als ein unterschiedlicher Weiterverarbeitungsprozess durchgeführt wird, können die entstehenden Masseströme von Gichtgas, Abgas, C, CO-Gas, H₂-Gas, CO₂-Gas optimal ausgenutzt werden.

Gemäß einer Ausführungsform des Prozesses wird der zweite Teil des CO aus dem CO₂-Konverter zunächst zu einem CO₂ enthaltenden Abgasgemisch verbrannt, bevor es als dieses Abgasgemisch zu dem Weiterverarbeitungsprozess weitergeleitet wird. So kann das erzeugte CO als Energieträger verwendet werden. Je nach Ausgestaltung des Weiterverarbeitungsprozesses ist es wünschenswert, CO₂ als Rohstoff zur Verfügung zu stellen.

Gemäß einer weiteren Ausführungsform des Prozesses wird das Gichtgas beim indirekten Leiten zum CO₂-Konverter zunächst zu einem CO₂ enthaltenden Abgasgemisch verbrannt, bevor es als dieses Abgasgemisch zu dem CO₂-Konverter weitergeleitet wird und in dem CO₂-Konverter zu CO reduziert wird. So können das im Gichtgas enthaltene CO und andere brennbare Bestandteile als Energieträger verwendet werden.

Je nach Ausgestaltung des Weiterverarbeitungsprozesses ist es vorteilhaft, einen Teil des CO₂ enthaltenden Abgasgemisches an dem CO₂-Konverter vorbei zu einem Weiterverarbeitungsprozess zu leiten, um dort CO₂ als Rohstoff zur Verfügung zu stellen.

Bei einer Ausführungsform des Prozesses wird ein Teil des Gichtgases direkt, d.h. am CO₂-Konverter vorbei, zu einem Weiterverarbeitungsprozess weitergeleitet. So kann eine größere Menge an CO₂ beim Weiterverarbeitungsprozess bereitgestellt werden. Es ist auch möglich, ein Gasgemisch mit einem gewünschten Verhältnis von CO zu CO₂ für den Weiterverarbeitungsprozess einzustellen.

Vorzugsweise wird ein Teil des CO in einem unteren Bereich über dem Spiegel der Metallschmelze in den Hochofenschacht eingeleitet, insbesondere in einem Bereich der Windgaseinleitung. So kann das CO als gasförmiges Reduktionsmittel in die Reduktionszone des Hochofenschachtes eingeleitet werden. Außerdem können bei einer Umrüstung eines bestehenden Hochofens auf den hier beschriebenen Prozess die schon vorhandenen Winddüsen als CO-Einlässe verwendet werden.

Ein Teil des CO wird vorzugsweise an einer oder mehreren CO-Einleitungsstellen entlang des Hochofenschachtes eingeleitet. So kann der Verlauf der verschiedenen Zonen des Hochofenschachtes beeinflusst werden und der Prozess gut gesteuert werden.

Die CO-Einleitungsstellen liegen optional teilweise auch unter dem Spiegel der Metallschmelze im Hochofenschacht. So kann bei Bedarf auch ein Reduktionsvorgang in der Metallschmelze erreicht werden.

Bei einer Ausführung des Prozesses wird zusätzlich Kohlenstoff in den unteren Bereich des Hochofenschachtes in Kontakt mit der Metallschmelze eingebracht, um den Schmelzpunkt des Metalls zu erniedrigen.

Bei einer Ausführung des Prozesses erfolgt das Reduzieren von CO₂ zu CO in dem CO₂-Konverter unter Zugabe von C bei einer Temperatur von 800 bis 1700°C. Bei diesen Bedingungen kann eine Einstellung des Boudouard-Gleichgewichts erreicht werden, bei welchem ein hoher Anteil des eingeleiteten CO₂ zu CO umgewandelt wird.

Vorzugsweise weist der Prozess, falls der Weiterverarbeitungsprozess ein biologischer Umwandlungsprozess ist, weiter folgende Schritte auf: Aufspalten eines Kohlenwasserstoff enthaltenden Fluids zu Kohlenstoff und Wasserstoff a) mithilfe eines Plasmas oder b) durch Hinzufügen thermischer Energie, wobei das Aufspalten vorzugsweise in einem separatem Kohlenwasserstoffkonverter ausgeführt wird; und Zuführen des Wasserstoffes (H₂) zu dem biologischen Umwandlungsprozess. So wird heißer Kohlenstoff für eine Reduktion des CO₂ im Boudouard-Gleichgewicht aus dem Gichtgas oder aus dem Abgas der Verbrennungsmaschine bereitgestellt. Weiter werden größere Mengen an Wasserstoff bereitgestellt, was ermöglicht, dass der biologische Umwandlungsprozess viel Ethanol und wenig oder kein CO₂ erzeugt.

Vorzugsweise wird bei der Ausführung des Prozesses, in der der Weiterverarbeitungsprozess ein Umwandlungsprozess zur Umwandlung von Synthesegas ist, das Synthesegas durch folgende Schritte erzeugt: Aufspalten eines Kohlenwasserstoff enthaltenden Fluids zu Kohlenstoff (C) und Wasserstoff (H₂) a) mithilfe eines Plasmas oder b) durch Hinzufügen thermischer Energie; und Vermischen von wenigstens einem Teil des Wasserstoffes (H₂) mit wenigstens einem Teil des im CO₂-Konverter erzeugten CO. So können große Mengen an Wasserstoff bereitgestellt werden. Vorzugsweise ist das Kohlenwasserstoff enthaltende Fluid ein kostengünstiges Fluid, wie CH4, Rohöl oder andere Schweröle.

In einer alternativen Form des Prozesses erfolgt das Reduzieren von CO₂ zu CO in dem CO₂-Konverter durch eine Reverse-Water-Shift-Reaktion, CO₂ + H₂ → CO + H₂O. Dadurch kann der CO₂-Ausstoß des Hochofenprozesses verringert werden, und es entstehen keine zusätzlichen Ströme an CO-Gas.

Vorzugsweise werden der Hochofenschacht und/oder der CO₂-Konverter zusätzlich beheizt. Da bei dem hier beschriebenen Prozess die Beheizung des Hochofenschachtes durch Koks/Kohle verringert oder vermieden werden kann, reicht die thermische Energie im Hochofenschacht möglicherweise nicht in jeder Situation aus, um genügend hohe Temperaturen zu erreichen. Durch die zusätzliche Beheizung können höhere Temperaturen erreicht werden, die zur Reduktion des Metallerzes und zum Schmelzen des Metalls erforderlich sind.

Vorzugsweise wird die zusätzliche Beheizung zumindest teilweise mit Wärme ausgeführt, die bei einem der oben beschriebenen Verbrennungsschritte anfällt, und/oder mit Wärme, die bei einem der Schritte des Aufspaltens eines Kohlenwasserstoff enthaltenden Fluids zu Kohlenstoff (C) und Wasserstoff (H₂) a) mithilfe eines Plasmas oder b) durch Hinzufügen thermischer Energie anfällt und/oder mit Wärme, die bei der Umwandlung von CO in funktionalisierte oder nicht-funktionalisierte Kohlenwasserstoffe anfällt. So kann die beim Aufspalten auftretende Wärme vor Ort in einem Prozess weiterverwendet werden, der konstant einen Wärmebedarf hat und wird nicht verschwendet.

Der hier beschriebene Hochofen zur Metallgewinnung weist folgendes auf: einen Hochofenschacht mit einem ersten Gichtgasauslass und wenigstens einem CO-Einlass; einen CO₂-Konverter, der einen CO₂-Konvertereingang und einen CO₂-Konvertergaseinlass für CO₂-haltige Gase aufweist und zum Reduzieren von CO₂ zu CO geeignet ist; wobei der Gichtgasauslass direkt oder indirekt mit dem CO₂-Konver-tergaseinlass verbunden ist; und wobei der CO₂-Konverter mindestens einen ersten CO-Auslass zum Ableiten eines ersten Teils des im CO₂-Konverter erzeugten CO aufweist, der direkt oder indirekt mit dem Hochofenschacht verbunden ist. Neben der Lösung der oben genannten Aufgabe wird dadurch in dem Hochofen CO als gasförmiges Reduktionsmittel erzeugt, welches leicht in den Hochofenschacht einzubringen ist. Weiter weist der CO₂-Konverter mindestens einen zweiten CO-Auslass zum Ableiten eines zweiten Teils des CO zu einem oder mehreren Weiterverarbeitungskonverter auf. Je nach Ausgestaltung des CO₂-Konverters fällt bei der Umwandlung des CO₂ mehr CO an, als im Hochofenschacht zur Reduktion von Metallerz benötigt wird. Das zusätzlich anfallende CO kann so als zweiter Teil abgeleitet werden und in einem Weiterverarbeitungsprozess als Rohstoff oder Energieträger verwendet werden. Gemäß einer Ausführung des Hochofens ist der Weiterverarbeitungskonverter ein Gasmotor, eine Gasturbine oder eine Brennstoffzelle. Mittels dieser Maschinen kann Wärme oder mechanische Leistung aus dem brennbaren CO-Gas gewonnen werden. Gemäß einer anderen Ausführung des Hochofens ist der Weiterverarbeitungskonverter ein Biokonverter, in dem ein Umwandlungsprozess unter Einsatz von Mikroben oder Algen nach einer oder mehreren der folgenden Netto-Gleichungen abläuft: a) 6CO + 3 H₂O → C₂H₅OH + 4 CO₂; b) 6 H₂ + 2CO₂ → C₂H₅OH + 3 H₂O;
c) 2 CO + 4 H₂ → C₂H₅OH + H₂O. So kann CO und insbesondere das unerwünschte CO₂ durch Zugabe von Wasserstoff in Ethanol umgewandelt werden. Bei geeigneter Wahl der Mikroben oder Algen kann auch Kerosin, Diesel, Ottokraftstoff, Methanol oder ein anderer Treibstoff erzeugt werden. Bei dieser Ausführung ist der Weiterverarbeitungskonverter ein Biokonverter, in dem ein Umwandlungsprozess unter Einsatz von Mikroben oder Algen zu Kerosin, Diesel, Ottokraftstoff, Methanol oder einem anderen Treibstoff als Produkt erfolgt. Gemäß einer Ausführung des Hochofens ist der Weiterverarbeitungskonverter ein CO-Konverter, der geeignet ist, mithilfe eines Synthesegases funktionalisierte und/oder nicht-funktionalisierte Kohlenwasserstoffe herzustellen. Die Kohlenwasserstoffe sind bevorzugt Paraffin, Kerosin, Diesel, Ottokraftstoff, Flüssiggase oder Methanol. So kann aus dem in großen Mengen anfallenden CO-Gas ein verkaufsfähiges Produkt gewonnen werden. Bei dieser Ausführung ist das Synthesegas vorteilhafterweise eine Mischung aus Wasserstoff vom Kohlenwasserstoffkonverter und CO vom CO₂-Konverter. Wenn der Hochofen mehrere unterschiedliche Weiterverarbeitungskonverter aufweist, die gleichzeitig betrieben werden können, können die entstehenden Masseströme von Gichtgas, Abgas, C, CO-Gas, H₂-Gas, CO₂-Gas optimal ausgenutzt werden.

Gemäß einer Ausführungsform weist der Hochofen weiter eine Verbrennungsmaschine mit einem Verbrennungsgaseinlass und wenigstens einem Abgasauslass zum Auslassen eines CO₂-haltigen Abgases auf, wobei mindestens einer der zweiten CO-Auslässe des CO₂-Konverters mit dem Verbrennungsgaseinlass der Verbrennungsmaschine verbunden ist. Die Verbrennungsmaschine wird wenigstens teilweise mit CO aus dem CO₂-Konverter betrieben; und einer der Abgasauslässe der Verbrennungsmaschine ist mit einem Weiterverarbeitungskonverter verbunden. In der Verbrennungsmaschine kann das im CO₂-Konverter erzeugte CO als Energieträger verwendet werden. Je nach Ausgestaltung des Weiterverarbeitungsprozesses ist es wünschenswert, CO₂-haltiges Abgas der Verbrennungsmaschine als Rohstoff zur Verfügung zu stellen.

Gemäß einer Ausführungsform weist der Hochofen weiter eine Verbrennungsmaschine mit einem Verbrennungsgaseinlass und wenigstens einem Abgasauslass zum Auslassen eines CO₂-haltigen Abgases auf. In diesem Fall liegt eine indirekte Verbindung von Gichtgasauslass und CO₂-Konverter vor, und der erste Gichtgasauslass des Hochofenschachtes ist mit dem Verbrennungsgaseinlass der Verbrennungsmaschine verbunden. Die Verbrennungsmaschine wird wenigstens teilweise mit Gichtgas betrieben. So können das im Gichtgas enthaltene CO und andere brennbare Bestandteile als Energieträger verwendet werden. Vorzugsweise ist bei dieser Ausführung einer der Abgasauslässe der Verbrennungsmaschine mit dem CO₂-Konvertergaseinlass des CO₂-Konverters verbunden, um einen Teil des CO₂ enthaltenden Abgasgemisches zu dem CO₂-Konverter zu leiten.

Je nach Ausgestaltung des Weiterverarbeitungsprozesses ist es vorteilhaft, dass einer der Abgasauslässe der Verbrennungsmaschine mit dem Weiterverarbeitungskonverter verbunden ist, um einen Teil des CO₂ enthaltenden Abgasgemisches am CO₂-Konverter vorbei zu dem Weiterverarbeitungsprozess zu leiten. So kann eine größere Menge an CO₂ für den Weiterverarbeitungsprozess bereitgestellt werden. Es ist auch möglich, ein Gasgemisch mit einem gewünschten Verhältnis von CO zu CO₂ für den Weiterverarbeitungsprozess einzustellen.

Bei Reduktion des CO₂ aus dem Gichtgas oder dem Abgas der Verbrennungsmaschine im CO₂-Konverter mittels C ist vorteilhafterweise mindestens einer der zweiten CO-Auslässe des CO₂-Konverters mit einem Weiterverarbeitungskonverter verbunden. In dem Weiterverarbeitungskonverter können die Anteile der anfallenden CO-Mengen, die nicht in den Hochofenschacht zurückgeleitet und verbraucht werden können, in Wärme, in mechanische Leistung oder in Produkte umgewandelt werden. Die Wärme und/oder mechanische Leistung können für den Betrieb des Hochofens verwendet werden. Die Produkte können verkauft werden.

Je nach Ausgestaltung des Weiterverarbeitungsprozesses ist es vorteilhaft, dass der Hochofen einen zweiten Gichtgasauslass aufweist, der direkt, d.h. am CO₂-Konverter vorbei, mit dem Weiterverarbeitungskonverter verbunden ist. Das Gichtgas enthält mit CO und CO₂ Bestandteile, die insbesondere in einem biologisch arbeitenden Weiterverarbeitungskonverter gut verarbeitet werden können.

Vorzugsweise weist der Hochofen einen CO-Einlass in einem unteren Bereich des Hochofenschachtes über dem Spiegel der Metallschmelze auf, insbesondere in einem Bereich der Windgaseinleitung. So kann das CO als gasförmiges Reduktionsmittel in die Reduktionszone des Hochofenschachtes eingeleitet werden. Außerdem können bei einer Umrüstung eines bestehenden Hochofens auf den hier beschriebenen Prozess die schon vorhandenen Winddüsen als CO-Einlässe verwendet werden.

Der Hochofen weist vorteilhafterweise mehrere CO-Einlässe auf verschiedenen Höhen des Hochofenschachtes auf. So kann CO-Gas in verschiedene Bereiche des Hochofenschachtes eingeleitet werden, und der Verlauf der verschiedenen Zonen des Hochofenschachtes beeinflusst werden und der Prozess gut gesteuert werden.

Optional sind die CO-Einlässe teilweise auf einer Höhe gelegen, die im Betrieb des Hochofens unter dem Spiegel der Metallschmelze im Hochofenschacht liegt. So kann bei Bedarf auch ein Reduktionsvorgang in der Metallschmelze erreicht werden.

Weiter weist der Hochofen optional einen C-Einlass für Kohlenstoff im unteren Bereich des Hochofenschachtes auf, der so angeordnet ist, dass Kohlenstoff (C) im Betrieb des Hochofens unter dem Spiegel der Metallschmelze im Hochofenschacht eingebracht werden kann, um den Schmelzpunkt des Metalls zu erniedrigen.

Bei einer Ausführung des Hochofens ist der CO₂-Konverter geeignet, CO₂ unter Zugabe von C bei einer Temperatur von 800 bis 1700°C zu CO zu reduzieren. Bei diesen Bedingungen kann ein Bereich des Boudouard-Gleichgewichtes erreicht werden, in welchem ein hoher Anteil des eingeleiteten CO₂ zu CO umgewandelt wird. Diese Ausführung ist vorteilhaft, wenn bereits heißer Kohlenstoff (C) verfügbar ist, z.B. von einem Kohlenwasserstoffkonverter.

Vorzugsweise weist der Hochofen einen mit Plasma oder mit thermischer Energie betriebenen Kohlenwasserstoffkonverter mit wenigstens einem Kohlenwasserstoffeingang für ein Kohlenwasserstoff enthaltendes Fluid sowie mit wenigstens einem C-Ausgang für Kohlenstoff und wenigstens einem H₂-Ausgang für Wasserstoff (H₂) auf; wobei wenigstens einer der C-Ausgänge für Kohlenstoff mit dem CO₂-Konvertereingang verbunden ist. Als Plasmagas sind beispielsweise inerte Gase geeignet, z.B. Argon oder Stickstoff. Andererseits bieten sich Wasserstoffgas H₂, CO oder Synthesegas an, da diese Gase bei der Aufspaltung der Kohlenwasserstoffe sowieso anfallen. So wird heißer Kohlenstoff für eine Reduktion des CO₂ im Boudouard-Gleichgewicht aus dem Gichtgas oder Abgas der Verbrennungsmaschine bereitgestellt.

Vorteilhafterweise steht einer der H₂-Ausgänge für Wasserstoff (H₂) des Kohlenwasserstoffkonverters mit dem Weiterverarbeitungskonverter in Verbindung. Dadurch werden größere Mengen an Wasserstoff bereitgestellt, was ermöglicht, dass der biologische Umwandlungsprozess viel Ethanol und wenig oder kein CO₂ erzeugt.

Bei einer alternativen Form des Hochofens ist der CO₂-Konverter geeignet, das Reduzieren von CO₂ zu CO mittels einer Reverse-Water-Shift-Reaktion, CO₂ + H₂ → CO + H₂O, auszuführen, welche ein CO/H₂O-Gemisch ergibt. Dadurch kann der CO₂-Ausstoß verringert werden, und es entstehen keine zusätzlichen Ströme an CO-Gas. Bei dieser Ausführung des Hochofens ist in Flussrichtung des CO/H₂O-Gemisches hinter dem CO-Auslass des CO₂-Konverters eine Vorrichtung zur Abscheidung des Wassers aus dem CO/H₂O-Gemisch angeordnet. Bei dieser Ausführung weist der Hochofen weiter einen mit Plasma oder mit thermischer Energie betriebenen Kohlenwasserstoffkonverter mit wenigstens einem Kohlenwasserstoffeingang für ein Kohlenwasserstoff enthaltendes Fluid sowie wenigstens einem C-Ausgang für Kohlenstoff und wenigstens einem H₂-Ausgang für Wasserstoff (H₂) auf. Wenigstens einer der H₂-Ausgänge für Wasserstoff (H₂) ist dabei mit dem CO₂-Konvertereingang verbunden. So kann Wasserstoff in großen Mengen zur Reduktion des CO₂ aus dem Hochofenschacht bereitgestellt werden.

Vorzugsweise weist der Hochofen eine Zusatzheizvorrichtung auf, welche geeignet ist, eine Reduktions- und/oder Schmelzzone des Hochofenschachtes zu beheizen. Durch die zusätzliche Beheizung können in jeder Betriebssituation hohe Temperaturen erreicht werden, die zur Reduktion des Metallerzes und zum Schmelzen des Metalls erforderlich sind.

Dabei setzt die Zusatzheizvorrichtung vorteilhafterweise zumindest solche Wärme ein, die in a) einer der oben erwähnten Verbrennungsmaschinen anfällt und/oder b) einem Weiterverarbeitungskonverter anfällt, der als Verbrennungsmaschine oder CO-Konverter ausgeführt ist, und/oder c) einem mit Plasma oder thermischer Energie betriebenen Kohlenwasserstoffkonverter anfällt, wie sie oben erwähnt wurden.

Zusammenfassend kann gesagt werden, dass der hier beschriebene Hochofen und der Prozess zum Aufbereiten von Metallerzen mehrere Vorteile bietet. Es werden weniger oder keine Kohle oder Koks benötigt. Daher fällt auch deutlich weniger oder keine Asche an, und folglich sind weniger oder keine Zuschlagsstoffe nötig. Dadurch können einerseits Kosten im Transport und Einkauf verringert werden und andererseits eine verbesserte Qualität des Rohmetalls erreicht werden. Weiter fällt weniger oder keine Schlacke an. Auf dem geschmolzenen Rohmetall schwimmende Schlacke ist hier nicht notwendig, da im Hochofenschacht eine reduzierende Schutzatmosphäre vorliegt.

Ein Grundgedanke des hier beschriebenen Hochofens und Prozesses zum Aufbereiten von Metallerzen ist, das Kohlendioxid aus der Gicht durch Reduktion wieder zum Kohlenmonoxid zu reduzieren. Das eingesetzte Reduktionsgas stammt dabei vollumfänglich aus dem Hochofen selbst und wird nicht separat generiert, wie beispielsweise aus EP 09318401 A1 bekannt. Eine weitere Grundidee ist das Kohlendioxid aus der Gicht als Synthesebaustein zur Herstellung eines synthetischen Wertstoffs zu nutzen, insbesondere für Kohlenwasserstoffe, wie unten konkret beschrieben.

Die Erfindung sowie weitere Einzelheiten und Vorteile derselben wird bzw. werden nachfolgend an bevorzugten Ausführungsbeispielen unter Bezugnahme auf die Figuren erläutert.

### Kurze Beschreibung der Zeichnungen

- Fig. 1: ist eine schematische Darstellung eines Hochofens gemäß einer ersten Ausführungsform;
- Fig. 2: ist eine schematische Darstellung eines Hochofens gemäß einer zweiten Ausführungsform;
- Fig. 3: ist eine schematische Darstellung eines Hochofens gemäß einer dritten Ausführungsform;
- Fig. 4: ist eine schematische Darstellung eines Hochofens gemäß einer vierten Ausführungsform;
- Fig. 5: ist eine schematische Darstellung eines Hochofens gemäß einer fünften Ausführungsform; und
- Fig. 6: ist eine schematische Darstellung eines Kohlenwasserstofflconverters, der in einem Hochofen gemäß einer der ersten bis fünften Ausführungsformen verwendet werden kann.

### Detaillierte Beschreibung

In der folgenden Beschreibung beziehen sich die Ausdrücke oben, unten, rechts und links sowie ähnliche Angaben auf die in den Figuren dargestellten Ausrichtungen bzw. Anordnungen und dienen nur zur Beschreibung der Ausführungsbeispiele. Diese Ausdrücke können bevorzugte Anordnungen zeigen, sind jedoch nicht im einschränkenden Sinne zu verstehen.

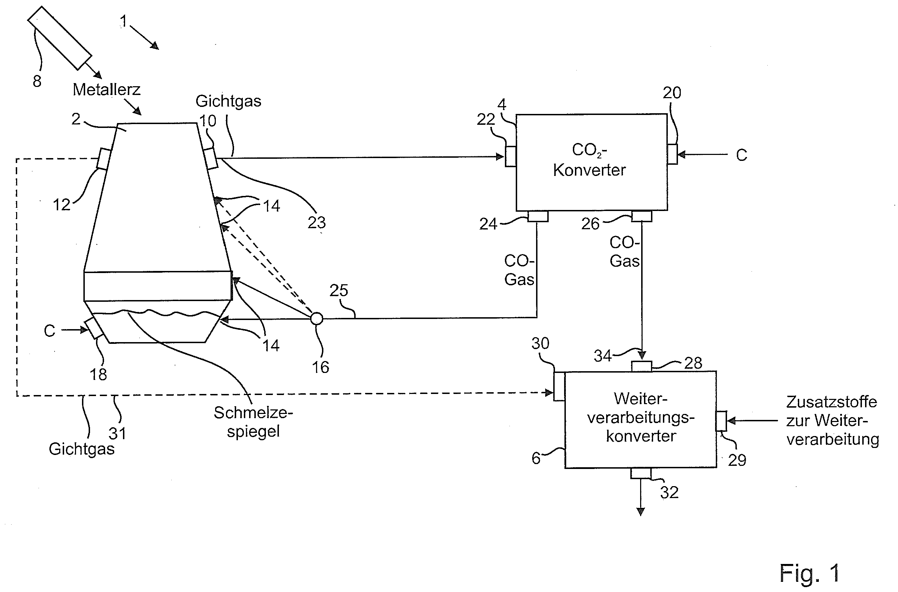

Fig. 1 zeigt eine schematische Darstellung eines Hochofens 1, welcher einen Hochofenschacht 2, einen CO₂-Konverter 4 und einen Weiterverarbeitungskonverter 6 aufweist. Am oberen Ende des Hochofenschachtes 2 ist eine Beschickungsanlage 8 angebracht, welche dazu dient, den Hochofenschacht 2 mit Einsatzstoffen bzw. Rohmaterial zu beschicken. Die Einsatzstoffe sind insbesondere Metallerz, möglicherweise notwendige Zuschlagsstoffe, Reduktionsmittel und Brennstoffe zum Beheizen bzw. Anheizen des Hochofens.

Der Hochofenschacht 2 weist von oben nach unten gesehen eine Eingangszone zum Trocknen und Vorwärmen, eine Reduktionszone, eine Kohlungszone und eine Schmelzzone auf. In der Trocknungs- und Vorwärmzone werden die Einsatzstoffe getrocknet und vorgewärmt. In der Reduktionszone wird Metallerz, welches hauptsächlich aus Metalloxid besteht, durch CO und C reduziert. In der Kohlungszone bildet sich ein Metall-Kohlenstoff-Gemisch, dessen Schmelzpunkt je nach Metall bei ca. 1000 bis 1300°C liegt. In der Schmelzzone wird das Metall-Kohlenstoff-Gemisch, insbesondere ein Eisen-Kohlenstoff-Gemisch, durch Verbrennung von Heizstoffen (beispielsweise Koks, brennbare Gase, Gichtgas usw.) oder eine Zusatzheizung zum Schmelzen gebracht. Das Rohmetall sammelt sich am Boden des Hochofenschachtes 2. Während der Verhüttung des Metallerzes bildet sich im Hochofenschacht 2 ein Gasgemisch, welches als Gichtgas bezeichnet wird. Das Gichtgas steigt aufgrund seiner Hitze von ca. 150-250° C im Hochofenschacht 2 nach oben.

Das Gichtgas besteht im klassischen Hochofenprozess in variabler Zusammensetzung aus Stickstoff (N₂, ca. 52-59%), Kohlendioxid (CO₂, ca. 22-24%), Kohlenmonoxid (CO, ca. 18-21%) und Wasserstoff (H₂, ca. 1-3%) sowie Wasserdampf und möglicherweise Spuren von Methan (CH₄). Der Stickstoff und ein Teil des Sauerstoffs werden mit der eingeblasenen Luft eingebracht. Kohlendioxid, Kohlenmonoxid und Wasserstoff entstehen durch Reaktionen im Betrieb des Hochofens, die dem Fachmann bekannt sind und hier nicht näher beschrieben werden.

Bei dem hier beschriebenen Hochofenprozess kann während des Anheizens des Hochofens 1 noch eine größere Menge Luft in den Hochofenschacht 2 eingeblasen werden. Wenn aber ein stabiler Betrieb des Hochofens 1 erreicht ist, wird keine nennenswerte Menge an Luft in den Hochofenschacht 2 eingeblasen. Da von außen keine Luft mehr in den Hochofenschacht 2 kommt, befinden sich im stabilen Betrieb folglich kein Stickstoff und auch kein Sauerstoff im Hochofenschacht 2. Das Gichtgas des hier beschriebenen Hochofenprozesses enthält im stabilen Betrieb also nahezu keinen Stickstoff sondern besteht in variabler Zusammensetzung aus Kohlendioxid (CO₂, ca. 50-53%), Kohlenmonoxid (CO, ca. 42-46%) und Wasserstoff (H₂, ca. 2-6%) sowie Wasserdampf (H₂O; abhängig von restlicher Feuchtigkeit im Metallerz und in den Zuschlagstoffen) und möglicherweise Spuren von Methan (CH₄). Die Gase CO₂ und CO entstehen aus der Umsetzung von Erz, können aber auch aus Zuschlagstoffen entstehen. In der Praxis kommt es je nach Auslegung des Hochofens, nach Zusammensetzung des Eisenerzes (Fe₂O₃ und/oder Fe₃O₄), Prozessbedingungen usw. zu einem veränderlichen Verhältnis von CO zu CO₂ im Gichtgas.

Es sei bemerkt, dass auch bei dem hier beschriebenen Hochofenprozess durch Undichtigkeiten des Hochofenschachtes 2 oder von Zuleitungen oder über Hilfsprozesse (z.B. eine Zusatzheizung usw.) eine vergleichsweise geringe Luftmenge und damit auch etwas Sauerstoff und Stickstoff in den Hochofenschacht 2 gelangen können. Diese Anteile sind jedoch sehr gering und sind für den hier beschriebenen Prozess zu vernachlässigen. Stickstoff ist nämlich ein inertes Gas und nimmt an keiner der beschriebenen Reaktionen teil. Der Sauerstoffanteil, der aus einer möglicherweise eintretenden geringen Luftmenge beigesteuert wird, fällt im Vergleich zu dem im Metallerz (Metalloxid) vorhandenen Sauerstoff nicht ins Gewicht. Daher werden diese geringen Gasanteile für die folgende Beschreibung außer Acht gelassen.

Sowohl beim klassischen als auch bei dem hier beschriebenen Hochofenprozess werden zusätzlich Staubpartikel und andere Verunreinigungen im Gichtgas mitgeführt. Diese Verunreinigungen werden in einem in der Technik bekannten und hier nicht weiter beschriebenen Staubabscheider herausgefiltert, um Verschmutzungen anderer Elemente des Hochofens zu vermeiden.

In diesem Zusammenhang sei erwähnt, dass die hier erwähnten Gase (CO-Gas, CO₂-Gas, H₂-Gas usw.) genau genommen Gasgemische sind. Die Gase werden zur besseren Unterscheidung in der Beschreibung nach ihrem Hauptbestandteil bzw. chemisch aktiven Bestandteil benannt. Dem Fachmann wird klar sein, dass die Gase auch Beimischungen oder Verunreinigungen enthalten können, die sich auf den beschriebenen Prozess nicht auswirken. Genauso können die Gase chemisch inaktive Bestandteile enthalten, wie den oben erwähnten Stickstoff. Beispielsweise könnte ein CO-Gas gemäß dieser Beschreibung zwar 90% Kohlenmonoxid, aber auch bis zu 10% andere Bestandteile enthalten. Kohlenmonoxid (CO) ist unter Zugabe von Sauerstoff brennbar. Wenn beispielsweise ein Gasgemisch mit 90% Kohlenmonoxid, 5% Stickstoff und 5% CO₂ (hier CO-Gas genannt) verbrannt wird, würden der Stickstoff und das CO₂ nicht an der Verbrennungsreaktion teilnehmen und wären damit chemisch inaktive Bestandteile.

Oben am Hochofenschacht 2 befindet sich ein erster Gichtgasauslass 10 sowie ein optionaler zweiter Gichtgasauslass 12. Über die Gichtgasauslässe 10, 12 können im Betrieb unterschiedliche Mengen an Gichtgas abgelassen werden. Weiterhin sind mehrere CO-Einlässe 14 auf verschiedenen Höhen des Hochofenschachtes 2 vorgesehen. Über die CO-Einlässe 14 kann gasförmiges Kohlenmonoxid auf verschiedenen Höhen des Hochofenschachtes 2 eingeblasen werden. Eine Verteileranordnung 16 ist dazu geeignet, um einen oder mehrere CO-Ströme zu den CO-Einlässen 14 auf unterschiedlichen Höhen zu leiten. Die Verteileranordnung 16 weist beispielsweise mehrere nicht näher gezeigte Ventile, Klappen und Rohre auf. Wenigstens einer der CO-Einlässe 14 befindet sich in einem unteren Bereich des Hochofenschachtes 2 über dem Spiegel der Metallschmelze, der sich im Betrieb einstellt. Insbesondere sind CO-Einlässe 14 in einem Bereich der Windgaseinleitung bei einem bekannten Hochofenschacht vorgesehen. Falls ein schon bestehender Hochofen auf das hier vorgestellte Verfahren umgerüstet werden soll, können schon vorhandene Winddüsen im Hochofenschacht als CO-Einlässe 14 verwendet werden. Weiterhin kann sich optional wenigstens einer der CO-Einlässe 14 auf einer Höhe befinden, die im Betrieb des Hochofens 1 unter dem Spiegel der Metallschmelze liegt.

Im unteren Bereich des Hochofenschachtes 2 ist ein C-Einlass 18 angeordnet. Über den C-Einlass 18 kann im Betrieb des Hochofens Kohlenstoff (C) unter dem Spiegel der Metallschmelze in den Hochofenschacht eingebracht werden, um den Schmelzpunkt des Metalls zu erniedrigen. Alternativ oder zusätzlich kann sich ein C-Einlass 18 im Bereich der Reduktionszone befinden, wobei durch diesen C-Einlass 18 pulverförmiger Kohlenstoff eingeblasen wird, um den Schmelzpunkt des gerade reduzierten Metalls zu erniedrigen.

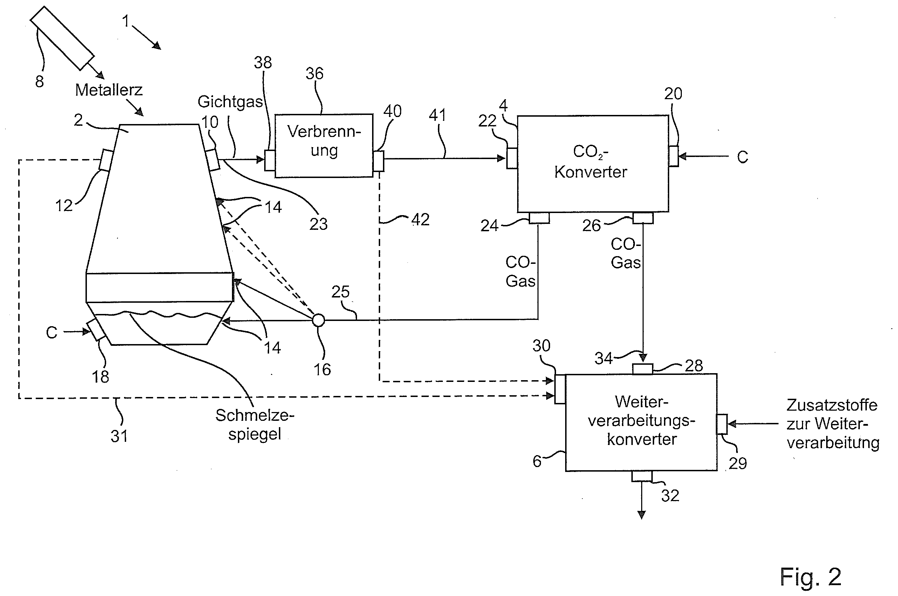

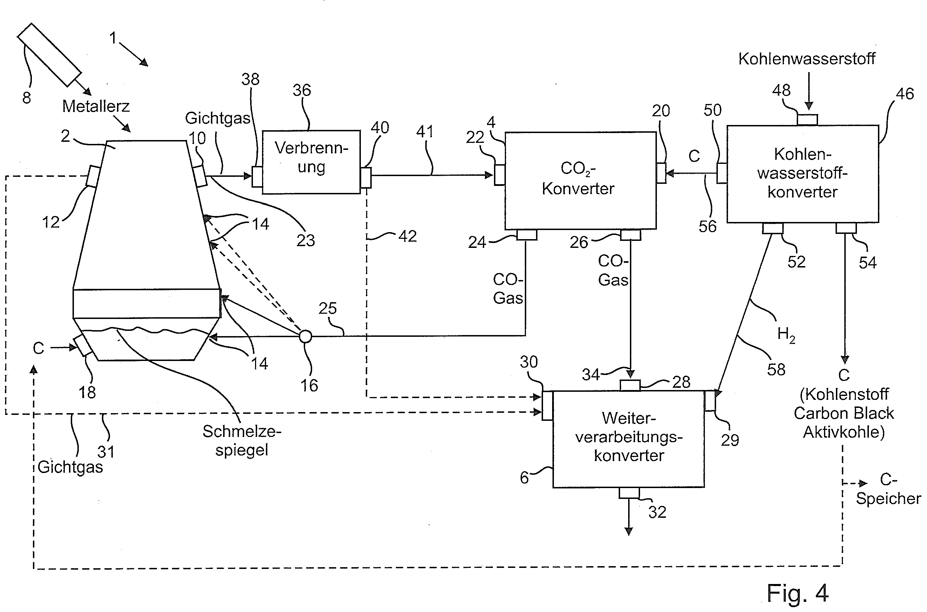

Der CO₂-Konverter 4 weist einen CO₂-Konvertereingang 20, einen CO₂-Konvertergaseinlass 22 einen ersten CO-Auslass 24 und einen zweiten CO-Auslass 26 auf. Der CO₂-Konvertergaseinlass 22 ist über eine erste Gichtgasverbindung 23 mit dem ersten Gichtgasauslass 10 des Hochofenschachtes 2 direkt verbunden. Später werden mit Bezug auf Fig. 2 und 4 auch Ausführungen mit indirekter Verbindung zwischen dem CO₂-Konvertergaseinlass 22 und dem Gichtgasauslass 10 beschrieben.

In der folgenden Beschreibung und in den Ansprüchen werden die Ausdrücke "direkt" und "indirekt" und Abwandlungen davon verwendet, z.B. "direkt verbunden". Dabei bedeutet der Ausdruck "direkt", dass ein Stoff ohne vorherige, weitere Verarbeitung von einem Bauelement des Hochofens 1 zum nächsten Bauelement geleitet wird. Entsprechend bedeutet der Ausdruck "indirekt", dass ein Stoff von einem Bauelement zu einem anderen Bauelement geleitet wird, wobei dazwischen noch eine Verarbeitung bzw. Umwandlung des Stoffes vorgenommen wird.

In der Ausführung der Fig. 1 weist der CO₂-Konverter 4 einen ersten CO-Auslass 24 und einen zweiten CO-Auslass 26 auf. Alternativ könnte der CO₂-Konverter nur einen CO-Auslass 24 oder 26 aufweisen, wobei sich nach diesem CO-Auslass 24 und/oder 26 ein in den Figuren nicht gezeigter Verteiler anschließt, welcher beliebige Anteile eines in dem CO₂-Konverter erzeugten CO-Stroms zu verschiedenen anderen Konvertern oder Bauteilen des Hochofens 1 leiten kann. Weiter ist es möglich, dass der CO₂-Konverter 4 mehrere erste CO-Auslässe 24 aufweist, die beispielsweise zu mehreren CO-Einlässen 14 oder zu mehreren Verteileranordnungen 16 führen. Unabhängig davon kann der CO₂- Konverter 4 mehrere zweite CO-Auslässe 26 aufweisen, die zu unterschiedlichen Weiterverarbeitungskonvertern 6 führen.

Der CO₂-Konverter 4 kann irgendein geeigneter CO₂-Konverter sein, der Kohlenmonoxid (CO) aus Kohlenstoff (C) und Kohlendioxid (CO₂) erzeugen kann. In der Ausführungsform der Fig. 1 arbeitet der CO₂-Konverter 4 nach einem Teil der in der Technik bekannten Hochofenreaktion, welche bei Temperaturen zwischen ca. 750°C und 1200°C abläuft ohne dass ein Katalysator notwendig ist. Vorzugsweise arbeitet der CO₂-Konverter 4 bei einer Temperatur zwischen 800°C und 1200°C. Die Betriebstemperatur des CO₂-Konverters 4 kann abhängig von der Temperatur der eingeleiteten Stoffe (d.h. Gichtgas, CO₂-haltiges Abgas, Kohlenstoff) gewählt werden. Wenn diese eingeleiteten Stoffe eine hohe Temperatur haben, kann die Betriebstemperatur des CO₂-Konverters 4 ebenfalls hoch sein. Wie oben erwähnt, besteht das in den CO₂-Konverter 4 eingeleitete Gichtgas bei dem hier offenbarten Hochofenprozess hauptsächlich aus Kohlenmonoxid (CO) und Kohlendioxid (CO₂). Im CO₂-Konverter 4 wird CO₂ über heißen Kohlenstoff C (der auch mit Wasserstoff vermischt sein kann) geleitet oder damit vermischt, um gemäß der folgenden chemischen Gleichung umgewandelt zu werden:

CO₂ + C → 2CO

Der eingeleitete Kohlenstoff C kann einfach aus einem Vorratsbehälter geliefert werden. Unten wird mit Bezug auf Fig. 4 eine Ausführungsform besprochen, bei welcher heißer Kohlenstoff C durch einen Kohlenwasserstoffkonverter erzeugt und geliefert wird. Der CO₂-Konverter 4 arbeitet bei dem Boudouard-Gleichgewicht. Bei Temperaturen von 800°C werden etwa 94% Kohlenmonoxid geliefert, und bei Temperaturen um 1000°C werden etwa 99% Kohlenmonoxid geliefert. Weiter wird restliches Wasser, das sich als restliche Feuchtigkeit noch im Metallerz und den Zuschlagstoffen befinden kann, als Wasserdampf (H₂O) aufgrund folgender Reaktion im CO₂-Konverter umgewandelt:

C + H₂O → CO + H₂

Die anderen Bestandteile des Gichtgases (CO und möglicherweise Spuren von N₂, H₂ und CH₄), die ebenfalls in den CO₂-Konverter 4 gelangen, nehmen nicht an der chemischen Umwandlung teil.

Das aus dem CO₂-Konverter 4 ausströmende Gasgemisch ist genau genommen ein wasserstoffarmes Synthesegas, welches zum Weiterverarbeitungskonverter geleitet wird. Der Wasserstoffgehalt hängt von der Feuchtigkeit des Metallerzes und der Zuschlagstoffe ab, und von der Menge an Wasserstoff, die möglicherweise mit dem Kohlenstoff vermischt ist. Das Gasgemisch besteht größtenteils aus CO-Gas, wobei ein Teil des CO schon als Bestandteil des Gichtgases vorlag und der Rest des CO aus der Umwandlung von im Gichtgas enthaltenen CO₂ im CO₂-Konverter 4 resultiert.

Der Weiterverarbeitungskonverter 6 ist eine Vorrichtung, welche geeignet ist, CO und CO₂ alleine oder in Verbindung mit anderen Stoffen weiterzuverarbeiten. Der Weiterverarbeitungskonverter 6 weist einen CO-Eingang 28, einen Zusatzstoffeingang 29, einen optionalen Gichtgaseinlass 30 und einen Weiterverarbeitungskonverterausgang 32 auf. Der CO-Eingang 28 ist über eine CO-Verbindung 34 mit dem CO-Auslass 26 des CO₂-Konverters verbunden. Der optionale Gichtgaseinlass 30 des Weiterverarbeitungskonverters 6 ist über eine zweite Gichtgasverbindung 31 mit dem zweiten Gichtgasauslass 12 des Hochofenschachtes 2 verbunden. Bei der Ausführung der Fig. 1 kann der Weiterverarbeitungskonverter 6 beispielsweise eine Verbrennungsmaschine, ein Biokonverter oder ein CO-Konverter sein, der zur Erzeugung von synthetischen funktionalisierten und/oder nicht-funktionalisierten Kohlenwasserstoffen geeignet ist, wie folgend erklärt:
Eine Verbrennungsmaschine, die als Weiterverarbeitungskonverter 6 eingesetzt wird, ist beispielsweise ein Gasbrenner, eine Gasturbine oder ein Gasmotor. In der Verbrennungsmaschine wird CO unter Zugabe von Sauerstoff bzw. Luft verbrannt, um Energie für eine anderen Maschine bereitzustellen und/oder um Wärme zu erzeugen. Weiterhin kann der Weiterverarbeitungskonverter 6 eine Brennstoffzelle sein, in der CO unter Zugabe von Sauerstoff oxidiert wird.

In einem Biokonverter, der alternativ als Weiterverarbeitungskonverter 6 eingesetzt wird, läuft ein Umwandlungsprozess unter Einsatz von Mikroben oder Algen nach einer oder mehreren der folgenden Nettogleichungen ab:
a) 6CO + 3H₂O → C₂H₅OH + 4CO₂;
b) 6H₂ + 2CO₂ → C₂H₅OH + 3H₂O;
c) 2CO + 4H₂ → C₂H₅OH + H₂O.
Im Falle eines Biokonverters werden natürlich vorkommende oder genetisch veränderte Mikroben oder Algen eingesetzt, um kohlenmonoxidhaltige Gase (das Gichtgas) bzw. reines Kohlenmonoxid (CO aus dem CO₂-Konverter 4) oder Kohlendioxid wahlweise in Verbindung mit Wasserstoff (wie später beschrieben wird) in Grundchemikalien umzuwandeln. Solche Grundchemikalien sind beispielsweise in Alkohole, Ether oder Ester. Dabei wird meist eine Schlüsselfähigkeit dieser Mikroben oder Algen ausgenutzt, nämlich die Fähigkeit aus Kohlenmonoxid in einer Art interner Water-Shift-Reaktion (WSR) den für die Reduktion von Kohlendioxid notwendigen Wasserstoff selbst herzustellen. Die Umwandlung von CO zu Ethanol (C₂H₅OH oder auch C₂H₆O) sieht dann beispielsweise folgendermaßen aus:

6CO + 3H₂0 → C₂H₅OH + 4CO₂

Wird zusätzlich Wasserstoff zugegeben, so läuft netto folgende Reaktion ab:

6H₂ + 2CO₂ → C₂H₅OH + 3H₂O

Bei geeigneter Wahl der Mikroben oder Algen kann auch Kerosin, Diesel, Ottokraftstoff, Methanol oder ein anderer Treibstoff erzeugt werden. Geeignete Mikroben oder Algen sind bekannt, beispielsweise anaerobe Bakterien namens Clostridium, kommerziell erhältlich beispielsweise von den Firmen Coskata, USA und BRI, USA sowie LanzaTech, Neuseeland. In dem Biokonverter werden die Mikroben oder Algen in Kontakt mit den eingeleiteten Gasen gebracht. Es wird weiter in Betracht gezogen, abhängig von der Art der Mikroben oder Algen auch Zusatzstoffe in den Biokonverter einzubringen, welche zur Unterstützung der Lebensfunktionen der Mikroben oder Algen dienen. Aufbau und Betriebsweise eines Biokonverters, auch bekannt als Synthesegas-Fermentation, sind aus der Fachliteratur bekannt.

Eine dritte Möglichkeit zur Ausführung des Weiterverarbeitungskonverters 6 ist ein CO-Konverter, in dem ein Synthesegas in einen funktionalisierten und/oder nicht-funktionalisierten Kohlenwasserstoff umgewandelt wird, vorzugsweise in Paraffin, Kerosin, Diesel, Ottokraftstoff, Flüssiggase oder Methanol. Der Weiterverarbeitungskonverter 6 ist in diesem Fall beispielsweise ein Fischer-Tropsch-Konverter, ein Bergius-Pier-Konverter oder ein Pier-Konverter. Der Aufbau und der Betriebsablauf solcher Konverter ist in der Technik bekannt und wird daher hier nicht genauer beschrieben. In dem Fall, dass der Weiterverarbeitungskonverter 6 ein CO-Konverter ist, wird über den Zusatzstoffeingang 29 Wasserstoff eingeleitet. Dieser Fall wird in Verbindung mit Fig. 4 später noch genauer beschrieben.

Die Gichtgaseinleitung über die zweite Gichtgasverbindung 31 vom Hochofenschacht 2 in den Weiterverarbeitungskonverter 6 ist optional und ist vorteilhaft, wenn der Weiterverarbeitungskonverter 6 ein Biokonverter oder eine Verbrennungsmaschine ist.

Durch den Zusatzstoffeingang 29 des Weiterverarbeitungskonverters 6 werden Zusatzstoffe eingeleitet, die bei der Weiterverarbeitung von CO oder CO₂ im Weiterverarbeitungskonverter benötigt werden. Diese Zusatzstoffe sind beispielsweise Wasserstoff (falls der Weiterverarbeitungskonverter 6 ein Biokonverter oder CO-Konverter ist), Luft bzw. reiner Sauerstoff (falls der Weiterverarbeitungskonverter 6 eine Verbrennungsmaschine ist), oder andere Zusatzstoffe.

Der Weiterverarbeitungskonverterausgang 32 gibt die Erzeugnisse des Weiterverarbeitungskonverters 6 aus. D.h. im Fall eines Gasmotors oder einer Gasturbine ist der Weiterverarbeitungskonverterausgang 32 eine Motor- oder Turbinenwelle. Im Fall eines chemischen Weiterverarbeitungskonverters (Biokonverter oder CO-Konverter) ist der Weiterverarbeitungskonverterausgang 32 ein Ausgang für flüssige oder gasförmige Produkte, die im Weiterverarbeitungskonverter 6 erzeugt werden.

Fig. 2 zeigt eine weitere Ausführungsform des Hochofens 1, die ähnlich aufgebaut ist, wie die Ausführungsform der Fig. 1. Gleiche oder entsprechende Elemente des Hochofens 1, die schon mit Bezug auf Fig. 1 besprochen wurden, werden in Fig. 2 mit den gleichen Bezugszeichen benannt und werden hier zur Abkürzung nicht noch einmal beschrieben.

Der in Fig. 2 gezeigte Hochofen 1 weist zusätzlich (gegenüber dem Hochofen 1 der Fig. 1) eine Verbrennungsmaschine 36 auf, welche zwischen dem Hochofenschacht 2 und dem CO₂-Konverter 4 angeordnet ist. Die Verbrennungsmaschine 36 weist einen Verbrennungsgaseinlass 38 und einen Abgasauslass 40 zum Auslassen eines CO₂-haltigen Abgases auf. Der Gichtgasauslass 10 des Hochofenschachtes 2 ist mit dem Verbrennungsgaseinlass 38 verbunden. Der Abgasauslass 40 ist mit dem CO₂-Konvertergaseinlass 22 des CO₂-Konverters 4 verbunden. D.h. der erste Gichtgasauslass 10 ist nur indirekt mit dem CO₂-Konvertergaseinlass 22 verbunden, da zwischen dem Hochofenschacht 2 und dem CO₂-Konverter 4 eine Verbrennung in der Verbrennungsmaschine 36 stattfindet.

Die Verbrennungsmaschine 36 kann ein Gasmotor, eine Gasturbine oder ein Gasbrenner sein, die ein CO₂-haltiges Abgas erzeugen. Falls die Verbrennungsmaschine 36 ein Gasbrenner ist, kann die vom Gasbrenner erzeugte Wärme verwendet werden, um den Hochofenschacht 2 mittels einer Zusatzheizung zu beheizen oder um Gase oder andere Stoffe vorzuwärmen, die in den Hochofenschacht 2 oder in den CO₂-Konverter 4 eingeleitet werden. Falls die Verbrennungsmaschine 36 ein Gasmotor oder eine Gasturbine ist, kann die Ausgabe des Gasmotors oder der Gasturbine verwendet werden, um beispielsweise Pumpen oder Ventilatoren mit Leistung zu versorgen, die für den Betrieb des Hochofens 1 benötigt werden.

Wie in Fig. 2 zu sehen ist, kann das gesamte CO₂-haltige Abgas aus dem Abgasauslass 40 über eine erste Abgasverbindung 41 in den CO₂-Konverter 4 geleitet werden (durchgezogene Linie). Optional (gestrichelte Linie) kann ein Teil des Abgases aus dem Abgasauslass 40 über eine zweite Abgasverbindung 42 zum Weiterverarbeitungskonverter 6 geleitet werden, beispielsweise über den Gichtgaseingang 30.

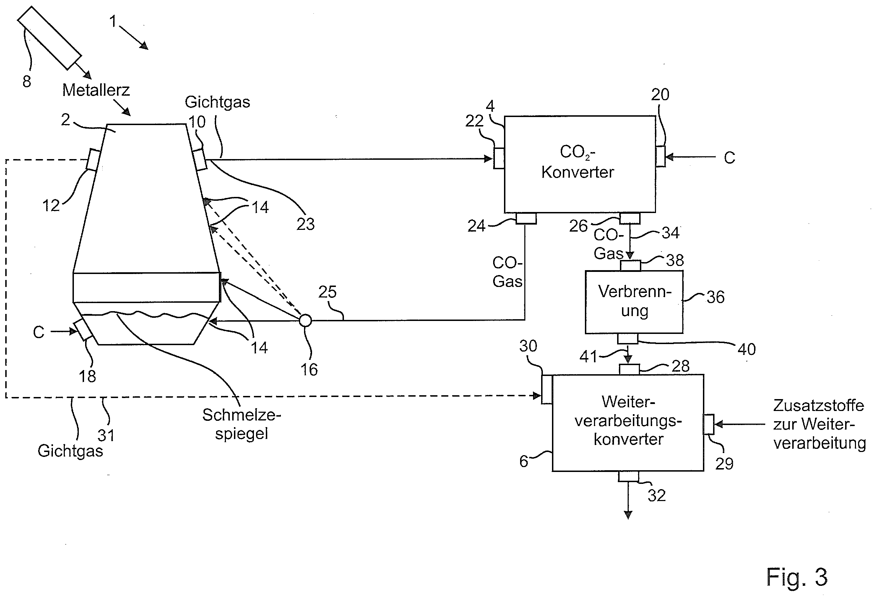

Fig. 3 zeigt eine weitere Ausführungsform des Hochofens 1, die ähnlich aufgebaut ist, wie die Ausführungsformen der Fig. 1 und 2. Gleiche oder entsprechende Elemente des Hochofens 1, die schon mit Bezug auf Fig. 1 oder 2 besprochen wurden, werden in Fig. 3 mit den gleichen Bezugszeichen benannt und werden hier zur Abkürzung nicht noch einmal beschrieben.

Der in Fig. 3 gezeigte Hochofen 1 weist zusätzlich (gegenüber dem Hochofen 1 der Fig. 1) eine Verbrennungsmaschine 36 auf, welche zwischen dem CO₂-Konverter 4 und dem Weiterverarbeitungskonverter 6 angeordnet ist. Die Verbrennungsmaschine 36 weist einen Verbrennungsgaseinlass 38 und einen Abgasauslass 40 zum Auslassen eines CO₂-haltigen Abgases auf. Der zweite CO-Auslass 26 des CO₂-Konverters 4 ist mit dem Verbrennungsgaseinlass 38 verbunden. Der Abgasauslass 40 ist mit dem CO-Eingang 28 des Weiterverarbeitungskonverters 6 verbunden. D.h. der zweite CO-Auslass 26 des CO₂-Konverters 4 ist nur indirekt mit dem CO-Eingang 28 verbunden, da zwischen dem CO₂-Konverter 4 und dem Weiterverarbeitungskonverter 6 eine Verbrennung in der Verbrennungsmaschine 36 stattfindet.

Die Verbrennungsmaschine 36 kann ein Gasmotor, eine Gasturbine oder ein Gasbrenner sein, die ein CO₂-haltiges Abgas erzeugen. Falls die Verbrennungsmaschine 36 ein Gasbrenner ist, kann die vom Gasbrenner erzeugte Wärme verwendet werden, um den Hochofenschacht 2 mittels einer Zusatzheizung zu beheizen oder um Gase oder andere Stoffe vorzuwärmen, die in den Hochofenschacht 2 oder in den CO₂-Konverter 4 eingeleitet werden. Falls die Verbrennungsmaschine 36 ein Gasmotor oder eine Gasturbine ist, kann die Ausgabe des Gasmotors oder der Gasturbine verwendet werden, um beispielsweise Pumpen oder Ventilatoren mit Leistung zu versorgen, die für den Betrieb des Hochofens 1 benötigt werden.

Fig. 4 zeigt eine weitere Ausführungsform des Hochofens 1, die ähnlich aufgebaut ist, wie die Ausführungsform der Fig. 1, 2 und 3. Gleiche oder entsprechende Elemente des Hochofens 1, die schon mit Bezug auf Fig. 1 bis 3 besprochen wurden, werden in Fig. 4 mit den gleichen Bezugszeichen benannt und werden hier zur Abkürzung nicht noch einmal beschrieben.

Der in Fig. 4 gezeigte Hochofen 1 weist eine Verbrennungsmaschine 36 auf, welche zwischen dem Hochofenschacht 2 und dem CO₂-Konverter 4 angeordnet ist. Die Verbrennungsmaschine 36 wurde oben mit Bezug auf Fig. 2 bereits genauer beschrieben. Die Einleitung des CO₂-haltigen Abgases aus dem Abgasauslass 40 erfolgt ebenfalls wie oben mit Bezug auf Fig. 2 beschrieben.

Der Hochofen 1 der Fig. 4 weist weiter einen Kohlenwasserstoffkonverter 46 auf. Der Kohlenwasserstoffkonverter 46 weist wenigstens einen Kohlenwasserstoffeingang 48 zum Einleiten eines Kohlenwasserstoff enthaltenden Fluids sowie einen ersten C-Ausgang 50 zum Ableiten von wenigstens Kohlenstoff (d.h. optional vermischt mit einem Teil Wasserstoff) und einem H₂-Ausgang 52 zum Ableiten von Wasserstoff auf. Der Kohlenwasserstoffkonverter 46 ist irgendein Kohlenwasserstoffkonverter, der eingespeiste Kohlenwasserstoffe (CₙHₘ) in Kohlenstoff und Wasserstoff umwandeln bzw. aufspalten kann, insbesondere ein mit Plasma oder mit thermischer Energie betriebener Kohlenwasserstoffkonverter. Der Kohlenwasserstoffkonverter 46 kann optional einen zweiten C-Ausgang 54 zum Ableiten von Kohlenstoff aufweisen. Der erste C-Ausgang 50 ist über eine C-Verbindung 56 mit dem CO₂-Konvertereingang 20 des CO₂-Konverters 4 verbunden. Der H₂-Ausgang 52 ist über eine H₂-Verbindung 58 mit dem Zusatzstoffeingang 29 des Weiterverarbeitungskonverters 6 verbunden und liefert somit H₂ als Zusatzstoff. Der erste C-Ausgang 50 und der H₂-Ausgang 52 können auch zu einem kombinierten Ausgang 50/52 für Kohlenstoff und Wasserstoff zusammengefasst sein. Der kombinierte Ausgang 50/52 ist nicht in den Fig. gezeigt, ist aber auf alle Ausführungsbeispiele anwendbar. Über den kombinierten Ausgang 50/52 können Kohlenstoff und Wasserstoff gemeinsam in den CO₂-Konverter 4 geleitet werden, insbesondere in Form eines H₂/C-Aerosols.

Der Kohlenwasserstoffkonverter 46 ist vorzugsweise ein mit Plasma betriebener Reaktor, insbesondere ein Kvaerner-Reaktor. Die Kohlenwasserstoffe werden dabei in Form von Kohlenwasserstoff enthaltenden Fluiden mittels eines Plasmabrenners bei hoher Temperatur in reinen Kohlenstoff (beispielsweise in Form von Aktivkohle, Carbon Black, Graphit oder Industrieruß) und Wasserstoff getrennt. Die Kohlenwasserstoffe enthaltenden Fluide als Eingangsstoffe für den Kohlenwasserstoffkonverter 46 sind beispielsweise Methan, Erdgas, Biogase, Flüssiggase oder Schweröl, es können aber auch synthetische, funktionalisierte und/oder nicht-funktionalisierte Kohlenwasserstoffe als Eingangsstoffe für den Kohlenwasserstoffkonverter 46 verwendet werden. In einer alternativen Ausführung wird der Kohlenwasserstoffkonverter 46 mit thermischer Energie betrieben und kann die Kohlenwasserstoffe z.B. mittels Pyrolyse aufspalten. Die Auftrennung der Kohlenwasserstoffe sollte möglichst unter Ausschluss von Sauerstoff erfolgen, um die unerwünschte Bildung von Kohlenstoffoxiden oder Wasser zu unterbinden. Geringe Mengen an Sauerstoff, die beispielsweise mit dem Kohlenwasserstoffen eingebracht werden, sind aber auch wiederum für den Prozess nicht schädlich.

Der Kohlenwasserstoffkonverter weist einen Prozessraum mit einem Einlass für ein kohlenwasserstoffhaltiges Fluid, wenigstens eine Einheit zum Einbringen von Aufspaltungsenergie in das Fluid und wenigstens einen Ausgang auf. Die Aufspaltungsenergie wird wenigstens teilweise durch Wärme zur Verfügung gestellt, die beispielsweise durch ein Plasma erzeugt wird (Plasmareaktor). Sie kann aber auch auf andere Weise zur Verfügung gestellt werden (thermischer Reaktor). Primär erfolgt eine Aufspaltung über Wärme. Das Fluid sollte auf über 1000°C insbesondere auf eine Temperatur über 1500°C aufgeheizt werden. Im Fall eines mit Plasma betrieben Kohlenwasserstoffkonverters kann als Plasmagas jedes geeignete Gas ausgewählt werden, welches von außen zugeführt wird oder im Kohlenwasserstoffkonverter entsteht. Als Plasmagas sind beispielsweise inerte Gase geeignet, z.B. Argon oder Stickstoff. Andererseits bieten sich Wasserstoffgas H₂, CO oder Synthesegas an, da diese Gase bei der Aufspaltung der Kohlenwasserstoffe sowieso anfallen.

Der Kohlenwasserstoffkonverter 46 kann ein Hochtemperatur-Reaktor sein, welcher bei einer Temperatur von mehr als 1000°C arbeitet (z.B. ein Hochtemperatur-Kvaerner-Reaktor), oder ein Niedertemperatur-Reaktor, der bei einer Temperatur zwischen 200°C und 1000°C arbeitet (z.B. ein Niedertemperatur-Kvaerner-Reaktor).

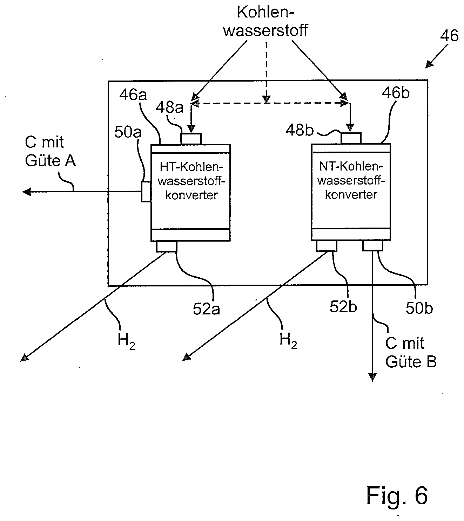

In einer weiteren Ausgestaltung kann der Kohlenwasserstoffkonverter 46 eine Kombination aus einem oder mehreren Hochtemperatur-Reaktoren mit einem oder mehreren Niedertemperatur-Reaktoren aufweisen. Eine solche Anordnung wird später in Verbindung mit den Ausführungen der Fig. 6 näher beschrieben.

Der im Kohlenwasserstoffkonverter 46 erzeugte Kohlenstoff kann in unterschiedlichen Anteilen aus dem ersten C-Ausgang 50 und dem zweiten C-Ausgang 54 herausgeleitet werden. Der erste C-Ausgang 50 wird verwendet, um einen Teil des erzeugten Kohlenstoffes (C) in den CO₂-Konverter 4 zu leiten. Zusammen mit dem Kohlenstoff kann auch ein variabler Teil des aus der Aufspaltung resultierenden Wasserstoffes aus dem C-Ausgang 50 und in den CO₂-Konverter 4 geleitet werden. (In diesem Fall sind der C-Ausgang 50 und der H₂-Ausgang 52 kombiniert.) Der Wasserstoff stört die oben erwähnte Reaktion von C und CO₂ im C-Konverter 4 nicht. Der Wasserstoff kann aber als Energieträger dienen, da er durch die Aufspaltung im Kohlenwasserstoffkonverter 46 sehr heiß ist. Der zweite C-Ausgang 54 wird verwendet, um den Anteil des erzeugten Kohlenstoffes zu entnehmen, der nicht im CO₂-Konverter 4 zur Erzeugung von Kohlenmonoxid verwendet wird. Der erzeugte Kohlenstoff hat je nach Ausführung des Kohlenwasserstoffkonverters 46 unterschiedliche Temperaturen, die bei Einsatz eines thermisch betriebenen Reaktors oder eines Niedertemperatur-Plasmareaktors zwischen 200°C und 1000°C liegen, aber bei Einsatz eines Hochtemperatur-Plasmareaktors bis zu 1700°C betragen können.

Wie oben erwähnt, kann die Betriebstemperatur des CO₂-Konverters 4 abhängig von der Temperatur der eingeleiteten Stoffe (d.h. Gichtgas, CO₂-haltiges Abgas, Kohlenstoff) gewählt werden. Wenn der in den CO₂-Konverter 4 eingeleitete Kohlenstoff (und optional der ebenfalls eingeleitete Wasserstoff) eine hohe Temperatur von beispielsweise 1500°C bis 1700°C hat, kann die Betriebstemperatur des CO₂-Konverters 4 ebenfalls so hoch sein. Bei Einsatz eines Kohlenwasserstoffkonverters 46, der Kohlenstoff nur mit 200°C bis 700°C ausgibt, wird in Betracht gezogen, den CO₂-Konverter 4 zusätzlich zu beheizen, um eine bessere CO₂-Umwandlung des Gichtgases/Abgases zu erreichen. Es sei bemerkt, dass die Temperatur des Kohlenstoffs neben der Betriebstemperatur des Kohlenwasserstoffkonverters 46 auch von der Ausführung (Länge, Isolierung usw.) der C-Verbindung 56 abhängt.

Der aus dem zweiten C-Ausgang 54 entnommene Kohlenstoff kann als Produkt, z.B. Aktivkohle, Graphit, Carbon Black oder andere Modifikation, wie Carbon Cones oder Carbon Discs, entnommen werden. Je nach Form und Qualität des entnommenen Kohlenstoffes kann der entnommene Kohlenstoff als Rohstoff in der chemischen Industrie oder für die Elektronikindustrie verwendet werden. Mögliche Anwendungen sind beispielsweise die Halbleiterherstellung, Reifenherstellung, Tinten, Toner oder ähnliche Produkte. Der vom Kohlenwasserstoffkonverter 46 erzeugte Kohlenstoff ist insbesondere bei Verwendung eines Plasma-Kohlenwasserstoffkonverters ein hochreiner Rohstoff, der gut weiterverarbeitet werden kann.

Der optionale zweite C-Ausgang 54 des Kohlenwasserstoffkonverters 46 kann weiter mit dem C-Einlass 18 des Hochofenschachtes 2 verbunden sein, so dass der im Kohlenwasserstoffkonverter 46 erzeugte Kohlenstoff im Hochofenprozess verwendet werden kann.

Bei der Ausführungsform der Fig. 4 kann optional zwischen dem CO₂-Konverter 4 und dem Weiterverarbeitungskonverter 6 ebenfalls eine Verbrennungsmaschine 36 vorgesehen sein, wie sie oben in Verbindung mit dem Ausführungsbeispiel der Fig. 3 beschrieben wurde. Diese zweite Verbrennungsmaschine 36 ist in Fig. 4 zu Vereinfachungszwecken nicht dargestellt. Der Einsatz einer zweiten Verbrennungsmaschine 36 zwischen dem CO₂-Konverter 4 und dem Weiterverarbeitungskonverter 6 ist von der geplanten Weiterverarbeitung im Weiterverarbeitungskonverter 6 abhängig.

Wie oben erwähnt, ist das aus dem CO₂- Konverter 4 ausströmende Gasgemisch genau genommen ein wasserstoffarmes Synthesegas, welches größtenteils aus CO besteht. Dieses wasserstoffarme Synthesegas kann mit Wasserstoff aus dem Kohlenwasserstoffkonverter 46 zu einem wasserstoffreichen Synthesegas vermischt werden. Das Vermischen kann direkt im Weiterverarbeitungskonverter 6 stattfinden oder in einem (nicht gezeigten) vorgeschalteten Mischer. Bei einer Ausführung, bei der Kohlenstoff und zumindest ein Teil des Wasserstoffes aus dem Kohlenwasserstoffkonverter 46 zusammen (z.B. als H₂/C-Aerosol) in den CO₂-Konverter 4 eingeleitet werden, strömt aus dem CO₂-Konverter 4 ein Synthesegas mit höherem Wasserstoffgehalt.

Der Weiterverarbeitungskonverter 6 gemäß dem in Fig. 4 gezeigten Ausführungsbeispiel kann also mit einem Gasgemisch betrieben werden, welches unterschiedlich hohe Anteile von CO₂, CO und H₂ hat. Der CO₂-Anteil des in den Weiterverarbeitungskonverter 6 eingeleiteten Gasgemisches kommt aus dem Abgas der Verbrennungsmaschinen 36. Je nachdem, ob die Verbrennungsmaschinen 36 überhaupt vorgesehen sind und abhängig davon, welchen Anteil von Gichtgas oder CO diese verbrennen, ist der CO₂-Anteil mehr oder weniger hoch. Der CO-Anteil des Gasgemisches kommt vom CO₂-Konverter und der H₂-Anteil kommt vom Kohlenwasserstoffkonverter 46. Das Gasgemisch kann als Synthesegas bezeichnet werden. Synthesegas, oder abgekürzt Syngas, ist eine Gasmischung, aus Kohlenmonoxid und Wasserstoff, die außerdem Kohlendioxid aufweisen kann. Das Synthesegas hat etwa 50% der Energiedichte von natürlichem Erdgas. Das Synthesegas kann verbrannt und somit als Brennstoffquelle verwendet werden. Das Synthesegas kann weiterhin als Zwischenprodukt zur Erzeugung von anderen chemischen Erzeugnissen verwendet werden.

Das in den Weiterverarbeitungskonverter 6 gelieferte Gasgemisch ist brennbar und kann grundsätzlich verbrannt werden, um mechanische Leistung oder Heizleistung zu erzeugen. Der Weiterverarbeitungskonverter 6 ist in diesem Fall eine Verbrennungsmaschine. Die erzeugte mechanische Leistung kann beispielsweise zur Stromerzeugung oder zur sonstigen Leistungsversorgung für Maschinen im Hochofen 1 verwendet werden. Entstehende Verbrennungswärme kann beispielsweise zum Beheizen des Hochofenschachtes 2 verwendet werden.

Der Weiterverarbeitungskonverter 6 kann auch ein Biokonverter sein, wie er oben in Verbindung mit den vorhergehenden Ausführungsbeispielen der Fig. 1 bis 3 beschrieben wurde. Falls der Weiterverarbeitungskonverter 6 ein Biokonverter ist, kann es abhängig von der eingesetzten Art von Mikroben oder Algen erwünscht sein, unterschiedliche Anteile von CO und CO₂ in den Weiterverarbeitungskonverter 6 zu leiten. Beispielsweise kann ein Teil des CO-Stroms aus dem zweiten CO-Auslass 26 direkt in den Weiterverarbeitungskonverter 6 geleitet werden, während ein anderer Anteil des CO-Stroms aus dem zweiten CO-Ausgang 26 durch eine Verbrennungsmaschine 36 geleitet werden kann und dort verbrannt werden kann, um Wärme zu erzeugen und mehr CO₂ in den Weiterverarbeitungskonverter 6 zu liefern. So kann eine für den Weiterverarbeitungskonverter 6 vorteilhafte Mischung von CO und CO₂ geliefert werden. In dem Biokonverter wird das Gasgemisch abhängig von dem CO₂-, CO- und H₂-Anteil gemäß einer der oben erwähnten Gleichungen von Algen oder Mikroben umgewandelt.

Falls der Weiterverarbeitungskonverter 6 ein CO-Konverter zur Erzeugung von funktionalisierten und/oder nicht-funktionalisierten Kohlenwasserstoffen ist, ist das zum Weiterverarbeitungskonverter 6 gelieferte Gasgemisch ein Synthesegas, das hauptsächlich aus CO und H₂ besteht. Aus dem Synthesegas stellt der CO-Konverter nach den oben beschriebenen Verfahren (Fischer-Tropsch, Bergius-Pier usw.) bevorzugt Paraffin, Kerosin, Diesel, Ottokraftstoff, Flüssiggase oder Methanol her. Das Gasgemisch enthält in diesem Fall wenig oder kein CO₂-haltiges Abgas, da bevorzugt CO und H₂ in den Weiterverarbeitungskonverter 6 eingeleitet wird.

Zu allen zuvor genannten Ausführungsbeispielen ist zu erwähnen, dass das Gichtgas, welches aus dem optional vorgesehenen, zweiten Gichtgasauslass 12 und durch die optionale zweite Gichtgasverbindung 31 geleitet wird, von schädlichen Stoffen gereinigt werden kann, beispielsweise von Schwefel, Asche, Schwermetallen und sonstigen Stoffen, die für die jeweiligen Weiterverarbeitungskonverter 6 schädlich sein können. In einem Fall, wo der Weiterverarbeitungskonverter 6 eine reine Verbrennungsmaschine ist, kann jedoch auch ungereinigtes Gichtgas aus dem zweiten Gichtgasauslass 12 verwendet werden.

Ebenso gilt für alle zuvor genannten Ausführungsbeispiele, dass ein Teil des CO₂-haltigen Abgases aus einer der Verbrennungsmaschinen 36 direkt in den Weiterverarbeitungskonverter 6 geleitet werden kann, falls ein bestimmter CO₂-Anteil im Weiterverarbeitungskonverter 6 erwünscht ist.

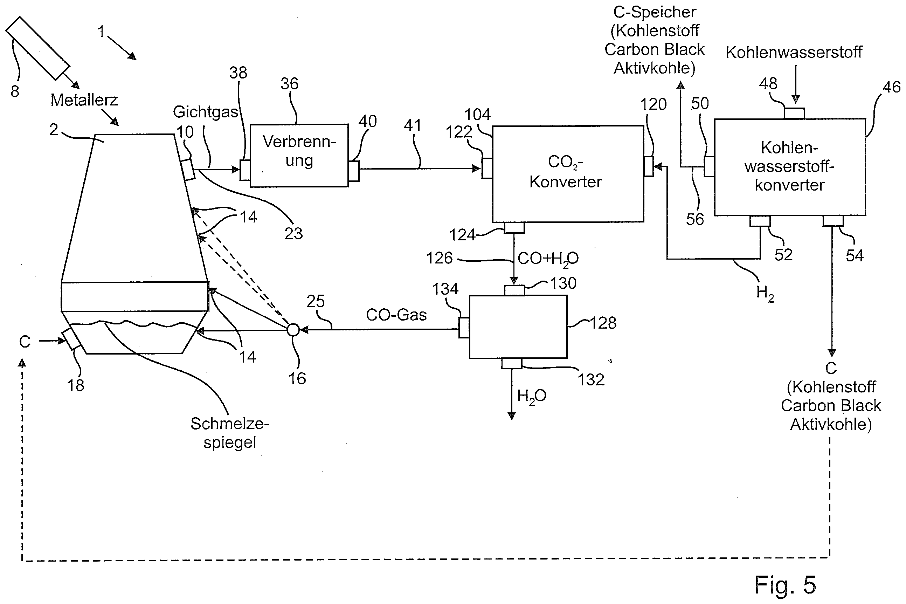

Das Ausführungsbeispiel der Fig. 5 zeigt einen weiteren Hochofen 1, der das Gichtgas und insbesondere das im Gichtgas vorkommende CO₂ mittels eines alternativen CO₂-Konverters 104 behandelt. Gleiche oder entsprechende Elemente des Hochofens 1, die schon mit Bezug auf Fig. 1 bis 4 besprochen wurden, werden in Fig. 5 mit den gleichen Bezugszeichen benannt und werden hier zur Abkürzung nicht noch einmal genau beschrieben.

Der Hochofenschacht 2 ist genauso aufgebaut wie in den zuvor beschriebenen Ausführungsbeispielen der Fig. 1 bis 4. Genauso kann zwischen dem Hochofenschacht 2 und dem alternativen Com-Konverter 104 eine Verbrennungsmaschine 36 angeordnet sein, welche CO₂-haltiges Abgas erzeugt. Das CO₂-haltige Abgas wird über eine erste Abgasverbindung 41 zum CO₂-Konvertergaseinlass 122 des alternativen CO₂-Konverters 104 geleitet.

Der alternative CO₂-Konverter 104 des Ausführungsbeispiels der Fig. 5 ist geeignet, CO₂ mittels einer Reverse-Water-Shift-Reaktion bzw. RWS-Reaktion zu einem CO-H₂0-Gemisch umzuwandeln, und zwar gemäß folgender Reaktion:

CO₂ + H₂ → CO + H₂O

Daher wird der alternative CO₂-Konverter 104 hier als RWS-CO₂-Konverter 104 bezeichnet. Der RWS-CO₂-Konverter 104 weist einen CO₂-Konvertereingang 120, einen CO₂-Konvertergaseinlass 122 und einen CO₂-Konverterausgang 124 auf, aus dem das CO/H₂O-Gemisch herausgeführt wird.

Das CO/H₂O-Gemisch wird über eine Gemischverbindung 126 zu einem Wasserabscheider 128 geleitet, der einen Gemischeinlass 130, einen H₂O-Auslass 132 und einen CO-Auslass 134 aufweist. Der Wasserabscheider 128 ist geeignet, um H₂O aus dem CO/H₂O-Gemisch abzuscheiden und dieses über den H₂O-Auslass 132 abzuleiten. Das abgeschiedene CO-Gas kann aus dem CO-Auslass 134 austreten und über die CO-Verbindung 25 zur Verteileranordnung 16 geleitet werden, welche wiederum das CO-Gas auf unterschiedlichen Höhen des Hochofenschachtes 2 einleitet. Es sei bemerkt, dass der Wasserabscheider 128 optional ist, und dass abhängig von der gewünschten Prozessführung auch ein Wasseranteil in den Hochofenschacht 2 eingeleitet werden kann.

Der Hochofen 1 des fünften Ausführungsbeispiels weist ebenfalls einen Kohlenwasserstoffkonverter 46 auf, der genauso aufgebaut sein kann und nach den gleichen Prinzipien arbeiten kann, wie sie oben für die Ausführungsbeispiele der Fig. 1 bis 4 beschrieben wurden. Der Kohlenwasserstoffkonverter 46 des fünften Ausführungsbeispiels ist jedoch anders angeschlossen. Der H₂-Ausgang 52 des Kohlenwasserstoffkonverters 46 ist mit dem CO₂-Konvertereingang 120 des RWS-CO₂-Konverters 104 verbunden. Wie oben erwähnt, kann ein Teil des im Kohlenwasserstoffkonverter 46 erzeugten Kohlenstoffs (C) als Produkt verkauft werden, beispielsweise über den ersten C-Ausgang 50 abgeführt werden oder zur Einleitung in den Hochofenschacht 2 über den C-Eingang 18 verwendet werden. Wie bei allen anderen Ausführungsbeispielen kann ebenso nur ein C-Ausgang 50, 54 vorgesehen sein, und die benötigten C-Anteile können später abgetrennt werden. Die C-Ausgänge 50 und 54 sind alleine dafür vorgesehen, um anzudeuten, dass unterschiedliche C-Ströme möglich sind.

Überschüssiger Wasserstoff H₂ aus dem Kohlenwasserstoffkonverter 46, der nicht im RWS-CO₂-Konverter 104 verwendet wird, kann optional in einen H₂-Speicher geleitet werden. Der gespeicherte Wasserstoff kann beispielsweise verkauft werden oder kann zur Beheizung an anderen Stellen im Prozess verwendet werden.

Bei allen Ausführungsbeispielen der Fig. 1 bis 5 kann eine in den Figuren nicht gezeigte Zusatzheizvorrichtung vorgesehen sein, welche geeignet ist, die Reduktionszone des Hochofenschachtes 2 zu beheizen. Diese Zusatzbeheizung kann möglicherweise notwendig sein, weil im Vergleich zum herkömmlichen Hochofenprozess, bei dem Koks bzw. Kohle und Eisenerz mit Zuschlagsstoffen in den Hochofenschacht 2 eingeleitet werden, niedrigere Prozesstemperaturen zu erwarten sind. Somit kann es je nach Aufbau und Größe des Hochofenschachtes 2 und abhängig von der Temperatur der in den Hochofenschacht 2 eingeleiteten Stoffflüsse notwendig sein, eine zusätzliche Beheizung vorzusehen. Diese Zusatzheizvorrichtung kann Wärme einsetzen, welche in einer der Verbrennungsmaschinen 36 anfällt oder die im Weiterverarbeitungskonverter 6 anfällt, falls dieser eine Verbrennungsmaschine ist. Weiterhin wird in Betracht gezogen, dass die Zusatzheizvorrichtung Abwärme aus dem Kohlenwasserstoffkonverter 46 verwendet. Der Kohlenwasserstoffkonverter 46 erzeugt nämlich bei der Aufspaltung der Kohlenwasserstoffe eine beträchtliche Abwärme, und zwar ungeachtet dessen, ob der Kohlenwasserstoffkonverter 46 thermisch oder mit Plasma betrieben wird.

Weiterhin sei bemerkt, dass bei allen Ausführungsbeispielen der Fig. 1 bis 5 je nach Größe der unterschiedlichen Konverter und des Hochofenschachtes 2 mehr als ein CO₂-Konverter, mehr als ein Kohlenwasserstoffkonverter, mehr als eine Verbrennungsmaschine und mehr als ein Weiterverarbeitungskonverter vorgesehen werden können, die parallel betrieben werden.

Ebenso wird für alle Ausführungsbeispiele der Fig. 1 bis 5 in Betracht gezogen, dass mehrere Weiterverarbeitungskonverter 6 verwendet werden, die nach unterschiedlichen Prinzipien arbeiten. Beispielsweise kann ein erster Weiterverarbeitungskonverter 6 als Gasbrenner (erste Verbrennungsmaschine) zur zusätzlichen Beheizung des Hochofenschachtes ausgeführt sein, ein zweiter Weiterverarbeitungskonverter 6, der parallel mit dem ersten Weiterverarbeitungskonverter betrieben wird, kann als Gasturbine (zweite Verbrennungsmaschine) ausgeführt werden, wobei die Gasturbine verwendet wird, um Pumpen oder Ventilatoren des Hochofens 1 zu betreiben, ein dritter Weiterverarbeitungskonverter 6, der ebenfalls parallel betrieben wird, kann mit einem Synthesegas aus CO und H₂ betrieben werden (CO-Konverter nach Fischer-Tropsch usw.), um wie oben beschrieben Kohlenwasserstoffe zu erzeugen, und das restliche Gasgemisch kann in einem vierten Weiterverarbeitungskonverter 6 in einem biologischen Prozess durch Algen oder Mikroben abgebaut werden (Biokonverter).

Man kann nach der obigen Darstellung folgende vorteilhafte Kombinationen zusammenfassen:
1. Ein CO₂-Konverter 4, der CO₂ unter Anwesenheit von C gemäß dem Bouduoard-Gleichgewicht zu CO reduziert, kombiniert mit einem Weiterverarbeitungskonverter 6, der eine Verbrennungsmaschine, ein Biokonverter oder ein mit Synthesegas laufender CO-Konverter ist. Ein Biokonverter und ein mit Synthesegas laufender CO-Konverter sind besonders vorteilhafte Weiterverarbeitungskonverter 6, da bei diesen Varianten wenig oder kein CO₂ aus dem Gesamtprozess austritt (siehe Beispiele 1 bis 4 unten)
2. Ein alternativer RWS-CO₂-Konverter 104, der CO₂ und H₂ gemäß der Reverse-Water-Shift-Reaktion zu einem CO/H₂O-Gemisch reduziert, kombiniert mit einem optionalen Wasserabscheider.

Bei allen oben erwähnten Ausführungsbeispielen ist vorteilhaft, wenn der zur Reduktion von CO₂ notwendige Kohlenstoff oder Wasserstoff in einem Kohlenwasserstoffkonverter erzeugt wird, welcher mit leicht verfügbaren und kostengünstigen Kohlenwasserstoffen betrieben werden kann. Insbesondere wird in Betracht gezogen, dass der Kohlenwasserstoffkonverter 46 mit natürlich vorkommenden kohlenwasserstoffhaltigen Gasen, d.h. Erdgas, Fracking-Gas oder sonstige leicht verfügbare und kostengünstige Gase, beschickt werden kann.

Im Folgenden wird der Betrieb der Ausführungsbeispiele gemäß Fig. 1 bis 5 beschrieben. An der einfachen Darstellung des Ausführungsbeispiels 1 soll zunächst der grundlegende Betrieb erklärt werden.

Im Betrieb wird ein Metallerz, welches größtenteils aus Metalloxiden besteht, in den Hochofenschacht 2 mittels der Beschickungsanlage 8 eingeleitet. Im Betrieb gibt es im Hochofenschacht 2 eine Temperaturverteilung von oben nach unten, welche von ca. 200 bis 2000°C reicht. Dabei herrscht in der Trocken- und Vorwärmzone eine Temperatur von ca. 200°C, in der Reduktionszone herrscht eine Temperatur von ca. 400 bis 900°C, in der Kohlungszone herrscht eine Temperatur von ca. 1000 bis 1500°C und in der Schmelzzone herrscht eine Temperatur von ca. 1200 bis 1800°C.

Wie oben erwähnt, sind die über die Beschickungsanlage 8 eingebrachten Einsatzstoffe üblicherweise Metallerz, Zuschlagsstoffe und Koks bzw. Kohle als Heiz- und Reduktionsmittel. Bei dem vorliegenden Verfahren kann die Zugabe von Koks bzw. Kohle als Heiz- und Reduktionsmittel im laufenden stabilen Betrieb verringert werden oder sogar vollständig vermieden werden. Es wird nur zu Anfang des Betriebs erforderlich sein, Koks bzw. Kohle in größeren Mengen als Heizmittel einzusetzen. Im laufenden stabilen Betrieb wird die Reduktion der Metallerze, insbesondere der Metalloxide, schließlich mittels gasförmigem CO erreicht, welches vom CO₂-Konverter 4, 104 in den Hochofenschacht 2 geleitet wird. Wie oben erwähnt, besteht das Gichtgas im klassischen Hochofenprozess in variabler Zusammensetzung aus Stickstoff (N₂, ca. 52-59%), Kohlendioxid (CO₂, ca. 22-24%), Kohlenmonoxid (CO, ca. 18-21%) und Wasserstoff (H₂, ca. 1-3%) sowie Wasserdampf und möglicherweise Spuren von Methan (CH₄). Eine solche Zusammensetzung wird bei dem hier beschriebenen Hochofenprozess nur zu Anfang des Betriebs erwartet, da während des Anheizens des Hochofens 1 noch eine größere Menge Luft in den Hochofenschacht 2 eingeblasen werden kann.

Wenn ein stabiler Betrieb des Hochofens 1 erreicht wurde und sich stabile Temperaturen eingestellt haben, wird keine nennenswerte Menge an Luft in den Hochofenschacht 2 eingeblasen. Das Gichtgas des hier beschriebenen Hochofenprozesses enthält im stabilen Betrieb also nahezu keinen Stickstoff sondern besteht in variabler Zusammensetzung aus Kohlendioxid (CO₂, ca. 50-53%), Kohlenmonoxid (CO, ca. 42-46%) und Wasserstoff (H₂, ca. 2-6%) sowie Wasserdampf (H₂O; abhängig vom Feuchtigkeitsgehalt des Erzes und möglicher Zuschlagstoffe) und möglicherweise Spuren von Methan (CH₄). Die Gase CO₂ und CO entstehen aus der Umsetzung von Erz, können aber auch aus Zuschlagstoffen entstehen. In der Praxis kommt es je nach Auslegung des Hochofens, nach Zusammensetzung des Eisenerzes (Fe₂O₃ und/oder Fe₃O₄), Prozessbedingungen usw. zu einem veränderlichen Verhältnis von CO zu CO₂ im Gichtgas.

Das Gichtgas ist heiß und steigt daher im Hochofenschacht 2 während des Betriebs auf. Das aufgestiegene Gichtgas wird aus dem ersten Gichtgasauslass 10 abgeleitet und wird über die erste Gichtgasverbindung 23 in den CO₂-Konverter 4 eingeleitet. Weiterhin wird Kohlenstoff (C-Partikel) über den CO₂-Konvertereingang 20 in den CO₂-Konverter 4 eingeleitet. Der Kohlenstoff kann gemäß Fig. 1 einfach aus einem C-Vorratsbehälter kommen. Der Kohlenstoff kommt alternativ, wie mit Bezug auf das Ausführungsbeispiel der Fig. 4 beschrieben, aus dem Kohlenwasserstoffkonverter 46. Der Kohlenstoff ist optional mit Wasserstoff vermischt (H₂/C-Aerosol).

Im CO₂-Konverter 4 wird Gichtgas, das hauptsächlich CO₂ enthält, über den CO₂-Konvertergaseinlass 22 eingeleitet und wird über den heißen Kohlenstoff C geleitet oder mit dem H_{2/}C-Aerosol vermischt. Wie oben erwähnt, besteht das Gichtgas beim stabilen Betrieb des vorliegenden Prozesses hauptsächlich aus CO₂ und CO in variabler Zusammensetzung und hat im Hochofenprozess eine Temperatur von 250 bis 400°C. Der heiße Kohlenstoff wird über den CO₂-Konvertereingang 20 in den CO₂-Konverter 4 geliefert. Der CO₂-Konverter 4 arbeitet beim Boudouard-Gleichgewicht, welches sich bei der Umsetzung von Kohlendioxid mit heißem Kohlenstoff einstellt. Die "Boudouard-Reaktion" ist dem Fachmann bekannt und wird hier nicht im Einzelnen beschrieben:

CO₂ + C → 2CO ΔH = +172,45 kJ/mol

Wie oben erwähnt, findet im CO₂-Konverter 4 in geringem Ausmaß auch eine Umwandlung von möglicherweise vorhandenem Wasserdampf (H₂O) statt, und zwar gemäß der Gleichung:

H₂O + C → CO + H₂ ΔH = +131,4 kJ/mol

Dem oben erwähnten veränderlichen Verhältnis von CO zu CO₂ im Gichtgas wird durch die Reaktionsführung im CO₂-Konverter 4 Rechnung getragen. Insbesondere wird so viel Kohlenstoff (C) in den CO₂-Konverter 4 geleitet, wie zur Umsetzung des Kohlendioxids und des Wasserdampfes notwendig ist. Weiter wird die Temperatur im CO₂-Konverter 4 so geregelt, dass ein möglichst guter Umwandlungsgrad erreicht wird. Bei Temperaturen von 800°C werden etwa 94% Kohlenmonoxid geliefert, und bei Temperaturen um 1000°C werden etwa 99% Kohlenmonoxid geliefert. In einem idealen Fall wird das Kohlendioxid (CO₂) im CO₂-Konverter 4 also nahezu vollständig mit dem zugeleiteten Kohlenstoff (C) umgesetzt und es entsteht (fast nur, 99%) CO-Gas. Im zeitlichen Mittel verdoppelt sich dann durch die Kohlenstoffzugabe über den CO₂-Konvertereingang 20 die Gasmenge im Kreislauf zwischen dem Hochofenschacht 2 und dem CO₂-Konverter 4. Daher wird in diesem Fall die Hälfte des behandelten Gichtgases anderweitig aus dem CO₂-Konverter 4 abgeführt, nämlich über den zweiten CO-Auslass 26 in den Weiterverarbeitungskonverter 6.

Aus dem CO₂-Konverter 4 tritt ein heißes Gasgemisch aus, das nahezu vollständig aus Kohlenmonoxid (CO) besteht und eine Temperatur von ungefähr 800°C bis 1000°C hat (abhängig von der Betriebstemperatur des CO₂-Konverters 4). Der Umwandlungsgrad hängt von der Prozessführung ab (Druck und Temperatur), wie gerade oben erwähnt. Das austretende Gasgemisch wird hier zur Vereinfachung als Kohlenmonoxid bzw. CO-Gas bezeichnet. Das aus dem CO₂-Konverter 4 austretende CO-Gas enthält ebenfalls Wärmeenergie, die direkt oder indirekt über einen in Fig. 1 nicht gezeigten Wärmetauscher beispielsweise zum Vorwärmen des in den CO₂-Konvertergaseinlass 22 eingeleiteten Gichtgases mit hohem CO₂-Gehalt verwendet werden kann.

Die Hälfte des CO-Gases aus dem CO₂-Konverter 4 wird durch die CO-Verbindung 25 zu den CO-Einlässen 14 am Hochofenschacht 2 geleitet. Über die Verteileranordnung 16 können unterschiedliche Mengen des CO-Gases in unterschiedlichen Höhen des Hochofenschachtes 2 eingeleitet werden. Sobald das CO-Gas wieder in den Hochofenschacht 2 gelangt ist, entsteht dort unter Anwesenheit des Metalloxids aus einem Teil des CO wieder CO₂. Aus den Zuschlagstoffen und den Metallerzen wird weiteres CO₂ (aus den Zuschlagstoffen) und Wasser (aus den Zuschlagstoffen und aus Erz) erzeugt. Weil im laufenden stabilen Betrieb des vorliegenden Hochofenprozesses kein neuer Stickstoff aus der Luft zugeführt wird, nimmt nach einer gewissen Betriebszeit des Hochofens 1 der Stickstoffanteil ab. Somit besteht das Gichtgas bei dem vorliegenden Prozess schließlich nur noch aus CO₂, CO und H₂. Der CO-Anteil und der Wasserstoffanteil erhöhen sich also gemäß den Gleichungen:

C + CO₂ → 2CO

C + H₂O → CO + H₂

Das CO-Gas und der Wasserstoff im Hochofenschacht 2 wirken als Reduktionsmittel und reduzieren das Metalloxid. Optional kann dabei ein Teil des CO-Gases unter dem Schmelzespiegel eingeleitet werden.

Optional kann über den C-Einlass 18 reiner Kohlenstoff in das Schmelzebad eingeleitet werden, wodurch sich der Schmelzpunkt des Metalls erniedrigt. Der im C-Eingang 18 eingeleitete Kohlenstoff kann aus der gleichen Quelle kommen, wie der Kohlenstoff, der in den CO₂-Konvertereingang 20 eingeleitet wird. Vorzugsweise kommt der Kohlenstoff C von dem oben beschriebenen Kohlenwasserstofflconverter 46.

Der zweite Teil des Gasgemisches bzw. CO-Gases aus dem CO₂-Konverter 4 wird über den zweiten CO-Auslass 26 und die CO-Verbindung 34 zum CO-Eingang 28 des Weiterverarbeitungskonverters 6 geleitet.

Wenn der Weiterverarbeitungskonverter 6 eine Verbrennungsmaschine ist, wird ein Verbrennungsprozess stattfinden, beispielsweise in einem Gasmotor oder einer Gasturbine, oder ein Oxidationsprozess, beispielsweise in einer Brennstoffzelle. Über den Zusatzstoffeingang 29 werden notwendige Zusatzstoffe eingeleitet, welche zur Verbrennung oder Oxidation des Gasgemisches bzw. CO-Gases nötig sind, beispielsweise Sauerstoff oder Luft im Falle eines Gasmotors oder einer Gasturbine bzw. eines Gasbrenners.

Falls der Weiterverarbeitungskonverter 6 als Biokonverter ausgeführt ist, läuft in dem Weiterverarbeitungskonverter 6 ein biologischer Umwandlungsprozess unter Einsatz von Mikroben oder Algen ab, und zwar gemäß folgenden Nettogleichungen:

a) 6CO + 3H₂O → C₂H₅OH + 4CO₂;

b) 6H₂ + 2CO₂ → C₂H₅OH + 3H₂O;

c) 2CO + 4H₂ → C₂H₅OH + H₂O.

Durch einen solchen biologischen Umwandlungsprozess können die in den Weiterverarbeitungskonverter 6 eingeleiteten Gase unter Einsatz von Mikroben oder Algen zu Kerosin, Diesel, Ottokraftstoff, Methanol oder einem anderen Kraftstoff als Endprodukt umgewandelt werden. Dieses Endprodukt wird dann durch den Weiterverarbeitungskonverterausgang 32 ausgegeben.

Falls der Weiterverarbeitungskonverter 6 ein CO-Konverter ist, wird ein funktionalisierter und/oder nicht-funktionalisierter Kohlenwasserstoff im Weiterverarbeitungskonverter 6 erzeugt. Der Weiterverarbeitungskonverter 6 wird in diesem Fall mit CO aus dem CO₂-Konverter 4 und H₂ als Zusatzstoff über den Zusatzstoffeingang 29 beliefert, was ein Synthesegas ergibt. Alternativ werden CO und H2 zusammen aus dem CO₂-Konverter 4 in den Weiterverarbeitungskonverter 6 geleitet, wenn ein H2/C-Aerosol in den CO₂-Konverter 4 geleitet wird. Die erzeugten Kohlenwasserstoffe sind beispielsweise Paraffin, Kerosin, Diesel, Ottokraftstoff, Flüssiggase oder Methanol. In diesem Fall arbeitet der Weiterverarbeitungskonverter beispielsweise nach dem Fischer-Tropsch-Verfahren, nach dem Bergius-Pier-Verfahren oder dem Pier-Verfahren, wobei diese Verfahren dem Fachmann bekannt sind und hier nicht näher beschrieben werden. In diesem Fall werden die erzeugten Kohlenwasserstoffe als Endprodukt aus dem Weiterverarbeitungskonverterausgang 32 ausgegeben.

Abhängig von der Art des eingesetzten Weiterverarbeitungskonverters 6 kann Gichtgas aus dem zweiten Gichtgasauslass 12 über die zweite Gichtgasverbindung 31 in den Gichtgaseingang 30 des Weiterverarbeitungskonverters 6 eingeleitet werden. Falls der Weiterverarbeitungskonverter 6 ein Biokonverter ist, wie oben beschrieben, wird das Gichtgas von Giftstoffen gereinigt, welche die Mikroben oder Algen schädigen können. Falls der Weiterverarbeitungskonverters 6 ein oben beschriebener CO-Konverter ist, wird das Gichtgas von Stoffen gereinigt, die für den Betriebsablauf des gewählten CO-Konverters (Fischer-Tropsch, Bergius Piers usw.) ungünstig sind.

Der Betrieb des in Fig. 2 gezeigten Ausführungsbeispiels des Hochofens 1 läuft in ähnlicher Weise ab, wie er oben für den Hochofen gemäß Fig. 1 beschrieben wurde. Die in Fig. 2 gezeigten Konverter können den gleichen Betrieb ausführen, wie oben beschrieben.

Der Betrieb des Hochofens 1 gemäß Fig. 2 weicht dadurch ab, dass das Gichtgas, welches aus dem ersten Gichtgasauslass 10 ausgeleitet wird, zunächst in die Verbrennungsmaschine 36 eingeleitet wird und unter Zugabe von Sauerstoff verbrannt wird. Bei dieser Verbrennung in der Verbrennungsmaschine 36 werden die brennbaren Bestandteile des Gichtgases verbrannt, d.h. CO und H₂. Kohlenmonoxid (CO) verbrennt dabei zu Kohlendioxid (CO₂) und Wasserstoff (H₂) verbrennt zu Wasserdampf (H₂O). Der Anteil von H₂O ist dabei sehr gering. Das Gichtgas wird also nur indirekt zum CO₂-Konverter 4 geleitet, da zunächst eine Verbrennung in der Verbrennungsmaschine 36 stattfindet.

Wie oben erwähnt, ist beim Anheizen des Hochofens 1 noch ein größerer Anteil von Stickstoff (N₂) im Gichtgas enthalten. Stickstoff ist ein inertes Gas und nimmt nicht an dem Verbrennungsvorgang in der Verbrennungsmaschine 36 teil. Im weiteren Betrieb nimmt der N₂-Gehalt im Gichtgas gemäß dem vorliegenden Verfahren immer weiter ab, da nach einer gewissen Betriebszeit kaum noch N₂ in den Hochofenschacht 2 eingeleitet wird. Nach der Verbrennung des im Gichtgas enthaltenen CO besteht das aus der Verbrennungsmaschine 36 austretende Abgasgemisch größtenteils aus CO₂, nämlich aus dem vor der Verbrennung im Gichtgas enthaltenen CO₂ und dem zu CO₂ verbrannten CO. Dieses CO₂-haltige Abgasgemisch wird über die Abgasverbindung 41 in den CO₂-Konvertergaseinlass 22 eingelassen. In dem CO₂-Konverter 4 wird das CO₂-haltige Abgas unter Zugabe von C zu CO reduziert, wie oben beschrieben.

Der weitere Betriebsablauf des Ausführungsbeispiels gemäß Fig. 2 entspricht dem oben für Fig. 1 beschriebenen Betriebsablauf und wird hier nicht wiederholt.

Wie weiter oben erwähnt, wird in Betracht gezogen, dass optional ein Teil des CO₂-haltigen Abgases über die zweite Abgasverbindung 42 zum Weiterverarbeitungskonverter 6 geleitet wird. So kann ein erwünschtes Verhältnis von CO zu CO₂ für den Weiterverarbeitungskonverter 6 bereitgestellt werden. Dies ist vorteilhaft, falls der Weiterverarbeitungskonverter 6 ein Biokonverter ist, der unter Einsatz von Mikroben oder Algen arbeitet.

Der Betriebsablauf der Ausführungsform gemäß Fig. 3 läuft ebenfalls in ähnlicher Weise ab, wie oben für die Ausführungsform der Fig. 1 beschrieben und wird zu Abkürzungszwecken ebenfalls nicht vollständig wiederholt.

Im Betrieb des Hochofens 1 gemäß Fig. 3 wird das CO-Gas, welches im CO₂-Konverter 4 erzeugt wird, aus dem zweiten CO-Auslass 26 ausgeleitet, und wird in die Verbrennungsmaschine 36 eingeleitet. In der Verbrennungsmaschine 36 wird das eingeleitete CO unter Zugabe von Sauerstoff zu CO₂ verbrannt. Der Betrieb der Fig. 3 unterscheidet sich dadurch, dass ein Teil des CO-Gases aus dem CO₂-Konverter 4 nur indirekt zum Weiterverarbeitungskonverter 6 geleitet wird, da zunächst eine Verbrennung in der Verbrennungsmaschine 36 stattfindet. Am Abgasauslass 40 der Verbrennungsmaschine 36 tritt ein CO₂-haltiges Abgas aus und wird über die Abgasverbindung 41 in den Weiterverarbeitungskonverter 6 geleitet.

In diesem Fall läuft der Weiterverarbeitungskonverter 6 nahezu vollständig mit CO₂ und dazu passenden Zusatzstoffen, die über den Zusatzstoffeingang 29 und den optional vorgesehen Gichtgaseingang 30 eingeleitet werden. Der Weiterverarbeitungskonverter 6 ist in der Ausführungsform der Fig. 3 ein Biokonverter, der unter Einsatz von Algen oder Mikroben arbeitet. Als Zusatzstoff kommen bei diesem Ausführungsbeispiel vorzugsweise Wasserstoff, Wasser oder CO in Betracht. Wasserstoff kann als Zusatzstoff aus einem Vorratsbehälter oder von dem später beschriebenen Kohlenwasserstoffkonverter 46 geliefert werden. Zusätzlich kann CO als Zusatzstoff aus dem Teil des Gichtgases stammen, der über den zweiten Gichtgasauslass 12 und die zweite Gichtgasverbindung 31 zum Weiterverarbeitungskonverter 6 geleitet wird. In diesem Fall kommen aus dem Weiterverarbeitungskonverterausgang 32 die im biologischen Umwandlungsprozess erzeugten Stoffe, d.h. Ethanol (C₂H₅OH bzw. C₂H₆O) und H₂O.

Der Betrieb des in Fig. 4 dargestellten Hochofens 1 läuft in ähnlicher Weise ab, wie oben für die anderen Ausführungsbeispiele dargelegt. Die in Fig. 4 gezeigten Konverter können den gleichen Betrieb ausführen, wie oben beschrieben.

Bei dem Ausführungsbeispiel der Fig. 4 wird der Kohlenstoff, der über den C-Eingang 20 in den CO₂-Konverter 4 eingeleitet wird, von dem oben beschriebenen Kohlenwasserstoffkonverter 46 erzeugt. Der Kohlenwasserstoffkonverter 46 erzeugt weiter Wasserstoff (H₂), der als Zusatzstoff in den Zusatzstoffeingang 29 des Weiterverarbeitungskonverters 6 eingeleitet wird. Alternativ kann wenigstens ein Teil des Wasserstoffs zusammen mit dem Kohlenstoff in den CO₂-Konverter 4 geleitet werden, z.B. als H₂/C-Aerosol (nicht in den Fig. gezeigt). Dieser Wasserstoff wird zusammen mit dem CO aus dem CO₂-Konverter 4 in den Weiterverarbeitungskonverter 6 geleitet.

Der Betrieb des Kohlenwasserstoffkonverters 46 läuft wie folgt ab: Kohlenwasserstoffe enthaltende Stoffe werden über den Kohlenwasserstoffeingang 48 in den Kohlenwasserstoffkonverter 46 eingeleitet. Wenn der Kohlenwasserstoff beispielsweise Methan (CH₄) ist, so entstehen 1 mol Kohlenstoff und 2 mol Wasserstoff aus 1 mol Methan. Der Kohlenwasserstoffkonverter 46 kann die eingeleiteten kohlenwasserstoffhaltigen Stoffe mittels eines in der Technik bekannten thermischen Verfahrens aufspalten, z.B. über Pyrolyse. Alternativ werden die kohlenwasserstoffhaltigen Stoffe mittels Plasma aufgespalten, beispielsweise mittels des Kvaerner-Verfahrens. Die Kohlenwasserstoffe werden bei der Aufspaltung durch Plasma in dem Plasma-Brenner des Kohlenwasserstoffkonverters 46 bei etwa 1600°C gemäß der folgenden Reaktionsgleichung umgewandelt, wobei die zugeführte Energie für den Plasma-Brenner elektrische Energie ist und der Plasma-Brenner thermische Energie erzeugt:

CₙHₘ + Energie → nC + m/2 H₂

Durch den hohen Energiegehalt der chemischen Produkte und die hohe Temperatur ergibt sich ein Wirkungsgrad der Umwandlung von nahezu 100%.

Der entstehende Kohlenstoff wird zumindest teilweise über den C-Eingang 20 in den CO₂-Konverter 4 eingeleitet. Da der aus dem Kohlenwasserstoffkonverter 46 austretende Kohlenstoff eine hohe Temperatur hat, kann wenigstens ein Teil der Wärmeenergie des Kohlenstoffes zum Beheizen des Umwandlungsprozesses im CO₂-Konverter 4 verwendet werden, der vorzugsweise bei einer Temperatur von ca. 1000°C arbeitet. Der Kohlenstoff kann optional mit Wasserstoff vermischt (H₂/C-Aerosol) in den CO₂-Konverter 4 geleitet werden, wobei der Wasserstoff als zusätzlicher Energieträger dient.

Die C-Verbindung 56 zwischen dem Kohlenwasserstoffkonverter 46 und dem CO₂-Konverter 4 ist so ausgestaltet, dass sich der Kohlenstoff auf dem Weg vom Kohlenwasserstoffkonverter 46 zum CO₂-Konverter 4 nicht stark abkühlt. Beispielsweise kann die C-Verbindung 56 isoliert und/oder beheizt sein. Der im Kohlenwasserstoffkonverter 46 erzeugte Wasserstoff enthält aufgrund der hohen Betriebstemperatur im Kohlenwasserstoffkonverter 46 ebenfalls Wärmeenergie. Daher besteht eine Möglichkeit zum Beheizen der C-Verbindung 56 darin, die Wärmeenergie des aus dem Wasserstoffausgang 52 herausgeleiteten Wasserstoffes, direkt oder indirekt über eine Wärmetauscheranordnung zum Beheizen der C-Verbindung 56 zwischen Kohlenwasserstoffkonverter 46 und CO₂-Konverter 4 zu verwenden. Dadurch ist es möglich, den heißen Kohlenstoff aus dem Kohlenwasserstoffkonverter 46 mit warmem bis heißem Kohlendioxid des Gichtgases oder CO₂-haltigen Abgases im CO₂-Konverter 4 ohne nennenswerte externe Energiezufuhr zu Kohlenmonoxid umzusetzen.

Wie oben erwähnt, kann ein Teil des im Kohlenwasserstoffkonverter 46 erzeugten Kohlenstoffes über den zweiten C-Ausgang 54 abgeleitet werden und entweder als Produkt verkauft werden oder über den C-Eingang 18 in den Hochofenschacht 2 eingeleitet werden. Alternativ kann der Kohlenstoff in einer der Verbrennungsmaschinen 36 verbrannt werden oder kann in den Hochofenschacht 2 als Reduktionsmittel eingeblasen oder kann verbrannt werden, um Wärmeenergie zu erzeugen.

Beim Ausführungsbeispiel der Fig. 4 kann der Weiterverarbeitungskonverter 6 wieder eine Verbrennungsmaschine, ein Biokonverter oder ein CO-Konverter zur Erzeugung von funktionalisierten und/oder nicht-funktionalisierten Kohlenwasserstoffen sein, wie oben in Verbindung mit den Ausführungsbeispielen der Fig. 1 bis 3 beschrieben. Der Betrieb der verschiedenen Ausführungen des Weiterverarbeitungskonverters 6 läuft ebenfalls so ab, wie oben für die anderen Ausführungsbeispiele beschrieben.

Bei allen Ausführungsbeispielen können die in den Weiterverarbeitungskonverter 6 eingeleiteten Gase, entweder direkt eingeleitet werden oder über einen in den Figuren nicht gezeigten Mischer eingeleitet werden. So kann beispielsweise abhängig von der erwünschten Zusammensetzung des Synthesegases in einem solchen Mischer ein erwünschtes Mischungsverhältnis von Wasserstoff zu CO eingestellt werden und an einem Synthesegasausgang des Mischers ausgeleitet werden. Falls im Mischer nicht der gesamte zur Verfügung stehende CO-Strom und der gesamte zur Verfügung stehende H₂-Strom verwendet werden, können das oder die nicht im Mischer zusammengeführten Anteile der reinen Gase CO oder H₂ jeweils einzeln weiterverarbeitet werden.

Bei allen Ausführungsbeispielen ist optional vorgesehen, dass Gichtgas aus dem zweiten Gichtgasauslass 12 über die zweite Gichtgasverbindung 31 zum Weiterverarbeitungskonverter 6 geleitet wird. Je nachdem, welcher Weiterverarbeitungskonverter 6 verwendet wird, wird das Gichtgas zuvor von schädlichen Bestandteilen gereinigt.

Ebenso gilt für alle Ausführungsbeispiele, dass bei einem Einsatz einer Verbrennungsmaschine 36 zwischen dem Hochofenschacht 2 und dem CO₂-Konverter 4 ein Teil des CO₂-haltigen Abgases direkt, d.h. unter Umgehung des CO₂-Konverters 4, über die zweite Abgasverbindung 42 zum Weiterverarbeitungskonverter 6 geleitet werden kann.

Im Folgenden wird der Betrieb des Ausführungsbeispiels gemäß Fig. 5 beschrieben. Der Betriebsablauf im Hochofenschacht 2 erfolgt wie oben bezüglich der Ausführungsform der Fig. 1 dargelegt. Daher wird der Betriebsablauf im Hochofenschacht 2 hier nicht wiederholt. Das aus dem Hochofenschacht 2 abgeleitete Gichtgas wird entweder direkt in den alternativen RWS-CO₂-Konverter 104 eingeleitet oder indirekt unter Zwischenschaltung einer Verbrennungsmaschine 36 als CO₂-haltiges Abgas in den RWS-CO₂-Konverter 104 eingeleitet. Wie auch bei den vorherigen Ausführungsbeispielen sind das indirekte Leiten über die Verbrennungsmaschine 36 und die Verbrennung darin optional.

Anders als bei den Ausführungsformen der Fig. 1 bis 4 wird neben dem Gichtgas oder dem CO₂-haltigen Abgas kein Kohlenstoff sondern Wasserstoff in den CO₂-Konvertereingang 120 des RWS-CO₂-Konverters 104 eingeleitet. Der Wasserstoff kommt aus dem in Fig. 5 gezeigten Kohlenwasserstoffkonverter 46. Alternativ kann der Wasserstoff einfach aus einem Vorratsbehälter kommen. Der Kohlenwasserstoffkonverter 46 arbeitet wie oben mit Bezug auf die anderen Ausführungsbeispiele der Fig. 1 bis 4 beschrieben. Der vom Kohlenwasserstoffkonverter 46 erzeugte Wasserstoff (H₂) wird in den RWS-CO₂-Konverter 104 eingeleitet und reagiert dort mit dem eingeleiteten CO₂ aus dem Abgas oder dem Gichtgas zu einem Gemisch von CO und H₂O gemäß der Reverse-Water-Shift-Reaktion: CO₂ + H₂ → CO + H₂O. Falls mit dem Gichtgas oder dem CO₂-haltigen Abgas auch Wasserdampf (H₂O) in den RWS-CO₂-Konverter 104 gelangt, verhält sich das so eingeleitete H₂O neutral und nimmt nicht an der Reverse-Water-Shift-Reaktion teil.

Das CO/H₂O-Gemisch wird durch den CO₂-Konverterausgang 124 aus dem RWS-CO₂-Konverter 104 ausgelassen. Das CO/H₂O-Gemisch wird durch den Wasserabscheider 128 geleitet, wobei im Wasserabscheider 128 das H₂O abgeschieden wird und durch den H₂O-Auslass 132 abgelassen wird. Das restliche CO-Gas wird aus dem CO-Auslass 134 des Wasserabscheiders 128 ausgelassen und über die CO-Verbindung 25 in den Hochofenschacht 2 eingeleitet. Das CO/H₂O-Gemisch kann alternativ direkt über die CO-Verbindung 25 in den Hochofenschacht 2 eingeleitet werden (nicht in Fig. 4 gezeigt).

Sofern der Kohlenwasserstoffkonverter 46 zusätzliches H₂-Gas erzeugt, welches nicht im RWS-CO₂-Konverter 104 mit CO₂ umgesetzt werden kann, kann dieses H₂ gespeichert werden und als Produkt verkauft werden. Alternativ kann solches überschüssiges H₂ verwendet werden, um die oben erwähnte Zusatzheizung für den Hochofenschacht 2 zu betreiben.

Der vom Kohlenwasserstoffkonverter 46 erzeugte und nicht im RWS-CO₂-Konverter 104 verwendete Kohlenstoff kann als Kohlenstoff, Carbon Black oder Aktivkohle als Produkt verkauft werden. Alternativ oder zusätzlich kann überschüssiger Kohlenstoff teilweise über den C-Einlass 18 in die Metallschmelze eingeleitet werden, um deren Schmelzpunkt zu erniedrigen. Weiter kann der erzeugte Kohlenstoff auch in den Hochofenschacht 2 eingeblasen werden oder zum Beheizen der Zusatzheizung oder des Hochofenschachtes 2 verwendet werden.

Bei der Ausführungsform der Fig. 5 ist kein Weiterverarbeitungskonverter vorgesehen, da das im Gichtgas enthaltene CO₂ gemäß der Reverse-Water-Shift-Reaktion, d.h. ohne Zugabe von Kohlenstoff (C), wieder in CO umgewandelt wird. Somit tritt die oben in Verbindung mit Fig. 1 bis 4 beschriebene Verdoppelung der Gasmenge im Kreislauf zwischen dem Hochofenschacht 2 und dem RWS-CO₂-Konverter 104 nicht ein. Eine Weiterverarbeitung von überschüssigem CO in einem Weiterverarbeitungskonverter ist daher bei der Ausführungsform der Fig. 5 nicht sinnvoll.

Abhängig von der Größe der Konverter und des gesamten Hochofens 1 können bei allen Ausführungsbeispielen mehr als ein CO₂-Konverter 4, 104, mehr als eine Verbrennungsmaschine 36 und mehr als ein Weiterverarbeitungskonverter 6 in der oben beschriebenen Weise betrieben werden. Weiterhin können die Weiterverarbeitungskonverter 6 die oben erwähnten unterschiedlichen Arbeitsweisen ausführen, d.h. ein Biokonverter kann beispielsweise parallel zu einem Bergius-Pier- oder Fischer-Tropsch-Konverter betrieben werden.

Bei allen Ausführungsbeispielen der Fig. 1 bis 5 kann der Hochofenschacht 2 oder der CO₂-Konverter 4, 104 zusätzlich mit Wärme aus einer Zusatzheizung beheizt werden. Die Temperatur im unteren Teil des Hochofenschachtes 2 sollte ausreichen, um das Metall in der Schmelze zu halten. Die Temperatur im CO₂-Konverter 4, 104 sollte ausreichen, um eine möglichst vollständige Umwandlung von CO₂ in CO zu erreichen. Die Wärme für die Zusatzheizung wird vorzugsweise aus der Verbrennung in einer der Verbrennungsmaschinen 36 oder einem Weiterverarbeitungskonverter 6 in Form einer Verbrennungsmaschine erzeugt. Alternativ kann Abwärme aus dem Betrieb des Kohlenwasserstoffkonverters 46 verwendet werden. Wie oben erwähnt, arbeitet der Kohlenwasserstoffkonverter 46 bei hohen Temperaturen, insbesondere wenn er in der Ausführung als Hochtemperatur-Plasmakonverter betrieben wird. Diese Abwärme kann beispielsweise mittels Wärmetauschern oder aneinander vorbei geleitete Stoffflüsse zum Hochofenschacht 2 und/oder zum CO₂-Konverter 4 geleitet werden.

Wenn ein Kohlenwasserstoffkonverter 46 mit niedriger Temperatur verwendet wird (z.B. mit thermischer Energie oder Niedertemperatur-Plasma), ist es nur nötig, eine Zusatzheizung beim CO₂-Konverter 4 zu betreiben, wenn die Umsetzung von CO₂ zu CO sonst wegen zu niedriger Betriebstemperatur (d.h. unter 800°C) im CO₂-Konverter 4 zu unvollständig wäre, d.h. zu wenig CO₂ in CO umgewandelt wird. Während bei Temperaturen von 800°C noch etwa 94% Kohlenmonoxid geliefert werden, sinkt der Umwandlungsgrad unter dieser Temperatur stark. Da bei Temperaturen um 1000°C schon etwa 99% Kohlenmonoxid geliefert werden, wäre es weniger sinnvoll, den CO₂-Konverter 4 noch viel weiter aufzuheizen (z.B. auf 1700°C), da die Hälfte der thermischen Energie mit der Ausgabe von CO-Gas über den zweiten CO-Auslass 26 verloren geht. Zumindest im unteren Bereich des Hochofenschachtes 2 sollte eine Temperatur von 1000°C bis 1300°C vorliegen, damit das reduzierte Metall (Roheisen) schmelzflüssig vorliegt und ausgeleitet bzw. abgestochen werden kann. Falls der Hochofenschacht 2 nicht ausreichend durch heißes eingeleitetes CO-Gas aufgeheizt wird und niedrigere Temperaturen vorliegen, ist es sinnvoll eine Zusatzheizung am Hochofenschacht 2 zu betreiben.

Wenn ein Kohlenwasserstoffkonverter 46 mit hoher Temperatur verwendet wird, liefert der Kohlenwasserstoffkonverter 46 bereits Kohlenstoff mit 900°C bis 1700°C (beim Hochtemperatur-Plasmareaktor 1500°C bis 1700°C) in den CO₂-Konverter 4. Damit wird eine Betriebstemperatur des CO₂-Konverters 4 bis 1700°C sinnvoll. Eine Zusatzheizung für den CO₂-Konverter 4 wäre in diesem Fall nicht nötig.

Es wird in Betracht gezogen, dass, je nach Größe der Anlage, eine Vielzahl von Kohlenwasserstoffkonvertern 46 nebeneinander betrieben werden kann, um die erwünschte Umwandlungskapazität bereitzustellen. Bei allen Ausführungsformen kann der Kohlenwasserstoffkonverter 46 eine Kombination von mehreren nebeneinander arbeitenden Kohlenwasserstoffkonvertern 46a, 46b sein, wie in Fig. 6 gezeigt, beispielsweise eine Kombination aus Hochtemperatur-Kohlenwasserstoffkonverter 46a und Niedertemperatur-Kohlenwasserstoffkonverter 46b. Ein Hochtemperatur-Kohlenwasserstoffkonverter arbeitet bei Temperaturen von größer 1000°C und ein Niedertemperatur-Kohlenwasserstoffkonverter arbeitet bei Temperaturen zwischen 200 und 1000°C. Die aufzuspaltenden Kohlenwasserstoffe können über eine gemeinsame Zuleitung oder über getrennte Zuleitungen in die Hochtemperatur- und Niedertemperatur-Kohlenwasserstoffkonverter 46a, 46b eingegeben werden. Ein Kohlenwasserstoffkonverter 46, der aus mehreren kleineren Modulen besteht, hat den Vorteil, dass unterschiedliche Kohlenwasserstoffe oder unterschiedliche Anteile von Kohlenwasserstoffen mit idealen Prozessparametern aufgespalten werden können. Weiterhin können die einzelnen Hochtemperatur- oder Niedertemperatur-Kohlenwasserstoffkonverter unterschiedliche Güten bzw. Sorten von Kohlenstoff herstellen, beispielsweise für den Verkauf und die Verwendung im Hochofenschacht.

Die oben beschriebenen Ausführungsformen wurden für ideale Bedingungen beschrieben. Es wird dem Fachmann klar sein, dass in der Praxis schwankende Anteile von Wasserstoff, CO₂, CO und N₂ im Gichtgas vorliegen werden. Daher wird es auch zu unterschiedlichen Ausgabeströmen an CO-Gas bzw. Synthesegas aus dem CO₂-Konverter 4 kommen. Mit Hilfe eines Mischers kann dennoch die Zusammensetzung eines Synthesegases, welches in dem Weiterverarbeitungskonverter 6 weiterverarbeitet werden soll, konstant gehalten werden. Somit kann ein Synthesegas mit annähernd konstanter Zusammensetzung für den Weiterverarbeitungskonverter 6 bereitgestellt werden.

Im Falle eines Weiterverarbeitungskonverters 6, welcher mit Mikroben oder Algen arbeitet, können die leichten Schwankungen des eingespeisten Gasgemisches aber durch die Mikroben oder Algen ausgeglichen werden. Folgende Beispiele sollen Situationen verdeutlichen, die sich ergeben können, wenn unterschiedliche Anteile der beteiligten Gase bzw. Einsatzstoffe umgewandelt werden:

### Beispiel 1

Es werden 50% des in den Hochofenschacht 2 eingebrachten CO zu CO₂ umgesetzt (Gesamtergebnis für CO ohne das ausgeleitete Metall (Fe)):

2CO + ½O₂ → CO + CO₂

Die Gase CO und CO₂ werden als Gichtgas zum CO₂-Konverter 4 geleitet. Im CO₂-Konverter 4 (Reduktion mit C; Boudouard) läuft folgende Reaktion ab:

3CO₂ + 3CO +3 C → 9CO

Anders gesagt: Gichtgas + 3C → 9CO

Im Kohlenwasserstoffkonverter 46 (hier ein Plasmakonverter, insbesondere ein Kvaerner-Reaktor) läuft folgende Reaktion ab:

3CH₄ → 3C + 6H₂

Dabei wird der gesamte erzeugte Wasserstoff (6 Mol H₂) im Weiterverarbeitungskonverter 6 (hier CO-Konverter zur Erzeugung von Kohlenwasserstoffen) verwendet. Der gesamte erzeugte Kohlenstoff (3 Mol C) wird in den CO₂-Konverter 4 geleitet.

Anschließend werden von den im CO₂-Konverter 4 entstandenen 9 Mol CO wieder zwei Drittel des Kohlenmonoxids (6 Mol CO) in den Hochofenschacht 2 zurückgeführt. Das restliche Drittel des Kohlenmonoxids (3 Mol CO) wird zusammen mit dem Wasserstoff aus dem Kohlenwasserstoffkonverter 46 als Synthesegas in den Weiterverarbeitungskonverter 6 (hier CO-Konverter) eingebracht. Der Wasserstoff (6 Mol H₂) wird als Zusatzstoff in den Weiterverarbeitungskonverter 6 eingebracht (oder wird über den CO₂-Konverter 4 in den Weiterverarbeitungskonverter 6 geleitet, falls der Kohlenstoff in Form eines H₂/C-Aerosols in den CO₂-Konverter 4 geleitet wird).

Folgende Reaktionen laufen beim Beispiel 1 in Summe ab:
1. Hochofenschacht 2:

   Fe₂O₃ + 6CO → 2Fe + 3CO₂ + 3CO
2. Kohlenwasserstoffkonverter 46 (hier Kvaerner-Reaktor):

   3CH₄ → 3C + 6H₂
3. CO₂-Konverter 4 (hier Boudouard):

   3CO₂ + 3CO + 3C → 9CO
4. Weiterverarbeitungskonverter 6 (hier Umsetzung von Synthesegas im CO-Konverter):

   3CO + 6H₂ → 3(CH₂)n + 3H₂O

### Beispiel 2

Es werden 75% des in den Hochofenschacht 2 eingebrachten CO zu CO₂ umgesetzt (Gesamtergebnis für CO ohne das ausgeleitete Metall (Fe)):

4CO + 3/2 O₂ → CO + 3CO₂

Die Gase CO und CO₂ werden als Gichtgas zum CO₂-Konverter 4 geleitet. Im CO₂-Konverter (Reduktion mit C; Boudouard) läuft folgende Reaktion ab:

3CO₂ + CO + 3C → 7CO

Anders gesagt: Gichtgas + 3C → 7CO

Im Kohlenwasserstoffkonverter 46 (hier ein Plasmakonverter, insbesondere ein Kvaerner-Reaktor) läuft folgende Reaktion ab:

3CH₄ → 3C + 6H₂

Anschließend werden von den im CO₂-Konverter 4 entstandenen 7 Mol CO wieder vier Siebtel des Kohlenmonoxids (4 Mol CO) in den Hochofenschacht 2 zurückgeführt. Die restlichen drei Siebtel des Kohlenmonoxids (3 Mol CO) werden zusammen mit dem Wasserstoff (6 Mol H₂) aus dem Kohlenwasserstoffkonverter 46 als Synthesegas in den Weiterverarbeitungskonverter 6 (hier CO-Konverter) eingebracht. Der Wasserstoff wird hier wieder als Zusatzstoff in den Weiterverarbeitungskonverter 6 eingebracht (oder wird über den CO₂-Konverter 4 in den Weiterverarbeitungskonverter 6 geleitet, falls der Kohlenstoff in Form eines H₂/C-Aerosols in den CO₂-Konverter 4 geleitet wird).

Folgende Reaktionen laufen beim Beispiel 2 in Summe ab:
1. Hochofenschacht 2:

   Fe₂O₃ + 4CO → 2Fe + 3CO₂ + CO
2. Kohlenwasserstoffkonverter 46 (hier Kvaerner-Reaktor):

   3CH₄ → 3C + 6H₂
3. CO₂-Konverter 4 (hier Boudouard):

   3CO₂ + CO + 3C → 7CO
4. Weiterverarbeitungskonverter 6 (hier Umsetzung von Synthesegas im CO-Konverter):

   3CO + 6H2 → 3(CH₂)n + 3H₂O

### Beispiel 3

Es werden 100% des in den Hochofenschacht 2 eingebrachten CO zu CO₂ umgesetzt (Gesamtergebnis für CO ohne das ausgeleitete Metall (Fe)):

2CO + O₂ → 2CO₂

Das CO₂ wird als Gichtgas zum CO₂-Konverter 4 geleitet. Im CO₂-Konverter 4 (Reduktion mit C; Boudouard) läuft folgende Reaktion ab:

2CO₂ + 2C → 4CO

Anders gesagt: Gichtgas + 2C → 4CO

Die eine Hälfte des im CO₂-Konverter 4 entstandenen Kohlenmonoxids wird wieder in den Hochofenschacht 2 zurückgeführt. Die andere Hälfte des Kohlenmonoxids wird zusammen mit dem Wasserstoff aus dem Kohlenwasserstoffkonverter 46 (hier Plasmakonverter) als Synthesegas in den Weiterverarbeitungskonverter 6 (hier Biokonverter) eingebracht.

Im Kohlenwasserstoffkonverter 46 (hier ein Plasmakonverter, insbesondere ein Kvaerner-Reaktor) läuft folgende Reaktion ab:

12CH₄ → 12C + 24H₂

Dabei wird der gesamte erzeugte Wasserstoff (24 Mol H₂) im Weiterverarbeitungskonverter 6 verwendet. Der gesamte erzeugte Kohlenstoff (12 Mol C) wird in den CO₂-Konverter 4 geleitet.

Folgende Reaktionen laufen beim Beispiel 3 in Summe ab:
1. Hochofenschacht 2:

   4Fe₂O₃ + 12CO → 8Fe + 12CO₂
2. Kohlenwasserstoffkonverter 46 (hier Kvaerner-Reaktor):

   12CH₄ → 12C + 24H₂
3. CO₂-Konverter 4 (hier Boudouard):

   12C + 12CO₂ → 24CO
4. Weiterverarbeitungskonverter 6 (hier Biokonverter):

   24H₂ + 12CO → 6C₂H₅OH + 18H₂O

### Beispiel 4

Es werden 100% des in den Hochofenschacht 2 eingebrachten CO zu CO₂ umgesetzt (Gesamtergebnis für CO ohne das ausgeleitete Metall (Fe)):

2CO +O₂ → 2CO₂

Anschließend wird das CO₂ aus dem Hochofenschacht 2 aufgeteilt. Die eine Hälfte des CO₂ wird in den CO₂-Konverter 4 geleitet. Die andere Hälfte des CO₂ aus dem Hochofenschacht 2 wird über die zweite Gichtgasverbindung 31 in den Weiterverarbeitungskonverter 6 (hier Biokonverter) eingebracht. Dieser zweite Anteil des CO₂ (als erster Zusatzstoff) steht dem Weiterverarbeitungskonverter 6 zusammen mit dem Wasserstoff (als zweiter Zusatzstoff) aus dem Kohlenwasserstoffkonverter 46 (hier Kvaerner-Reaktor) als Synthesegas zur Verfügung.

Im CO₂-Konverter 4 (Reduktion mit C; Boudouard) läuft folgende Reaktion ab:

2CO₂ + 2C → 4CO

Anders gesagt: Gichtgas + 2C → 4CO

Im Kohlenwasserstoffkonverter 46 (hier ein Plasmakonverter, insbesondere ein Kvaerner-Reaktor) läuft folgende Reaktion ab:

9CH₄ → 9C + 18H₂

Dabei wird der gesamte erzeugte Wasserstoff (18 Mol H₂) im Weiterverarbeitungskonverter 6 verwendet. Zwei Drittel des erzeugten Kohlenstoffes (6 Mol C) werden in den CO₂-Konverter 4 geleitet. Das restliche Drittel des Kohlenstoffes (3 Mol C) steht als Produkt zur Verfügung, beispielsweise zum Verkauf oder zur Verwendung in dem hier beschriebenen Hochofenprozess.

Folgende Reaktionen laufen beim Beispiel 4 in Summe ab:
1. Hochofenschacht 2:

   4Fe₂O₃ + 12CO → 8Fe + 12CO₂
2. Kohlenwasserstoffkonverter 46 (hier Kvaerner-Reaktor):

   9CH₄ → 9C + 18H₂
3. CO₂-Konverter 4 (hier Boudouard):

   6C + 6CO₂ → 12CO
4. Weiterverarbeitungskonverter 6 (hier Biokonverter):

   18H₂ + 6CO → 3C₂H₅OH + 9H₂O

Alternativ kann das Synthesegas aus CO und H₂ bei allen Beispielen in einem CO-Konverter zu funktionalisierten und/oder nicht-funktionalisierten Kohlenwasserstoffen umgewandelt werden, wie oben beschrieben.

### Vergleich: Beispiele 3 und 4

Vergleicht man Beispiel 3 (Syngasroute) und Beispiel 4 (CO₂-Route) miteinander, so erkennt man, dass bei gleicher produzierter Menge Roheisen aus dem gleichen Eisenerz Hämatit (Fe₂O₃) beim Beispiel 3 die größere Ausbeute an Produkt (Ethanol) aus dem Biokonverter anfällt. Für die doppelte Menge an Ethanol des Beispiels 3 muss aber auch ein Drittel mehr Methan gespalten werden. Weiter verzichtet man auf den zusätzlich verfügbaren Kohlenstoff (3 Mol C), der bei Beispiel 4 verfügbar ist und der für die Schmelzpunkterniedrigung des Rohmetalls (Roheisens) verwendet werden kann (über den C-Einlass 18). In beiden Fällen stammt der Kohlenstoff des Ethanols (und des Kohlenstoffs bzw. Pure Carbon) vollständig aus dem von außen zugeleiteten (fossilen) Methan. Im Beispiel 4 ist aber vorteilhaft, dass 100% des im Biokonverter umgesetzten Kohlenstoffs faktisch von dem CO₂ aus dem Hochofenschacht 2 kommt. Beispiel 4 bietet also Vorteile bei der CO₂-Vermeidung. Die Frage, ob mehr Methan eingesetzt werden soll und damit auch mehr Ethanol produziert werden soll (Beispiel 3) oder lieber weniger Ethanol dafür aber zusätzlicher Kohlenstoff (C) produziert werden soll (Beispiel 4), muss letztlich der Markt entscheiden.

Es ist also ersichtlich, dass sich die Prozessführung für das Gesamtverfahren flexibel an das Geschehen im Hochofenschacht 2 anpasst. Da der Hochofenprozess im Kreislauf gefahren wird, ist die Stoffmenge letztendlich abhängig von der Rohmetallproduktion (Roheisenproduktion) und dem verwendeten Metallerz (Eisenerz):

Fe₂O₃ + 3CO → 2Fe + 3CO₂

Fe₃O₄ + 4CO → 4Fe + 4CO₂

Bei der Verwendung von Hämatit (Fe₂O₃) wird also mehr CO pro Tonne Roheisen benötigt als bei Magneteisenstein (Fe₃O₄) als Erz. Demzufolge erzeugt Hämatit letztendlich auch mehr Produkt im Weiterverarbeitungskonverter 6 (z.B. Biokonverter) als Magneteisenstein.

Die Erfindung wurde anhand bevorzugter Ausführungsbeispiele beschrieben, wobei die einzelnen Merkmale der beschriebenen Ausführungsbeispiele frei miteinander kombiniert werden können und/oder ausgetauscht werden können, sofern sie kompatibel sind. Ebenso können einzelne Merkmale der beschriebenen Ausführungsbeispiele weggelassen werden, sofern sie nicht zwingend notwendig sind. Dem Fachmann sind zahlreiche Abwandlungen und Ausgestaltungen möglich und offensichtlich, ohne dass dadurch der Erfindungsgedanke verlassen wird.

## Patentansprüche

1. Prozess zum Aufbereiten von Metallerzen, der folgende Schritte aufweist:
Reduktion eines Metallerzes;
Erzeugen von Gichtgas, das CO₂ enthält, in einem Hochofenschacht (2);
Ableiten des Gichtgases aus dem Hochofenschacht (2);
Leiten von wenigstens einem Teil des Gichtgases direkt oder indirekt zu einem CO₂-Konverter (4) und Reduzieren des im Gichtgas enthaltenen CO₂ zu CO in dem CO₂-Konverter (4);
Leiten eines ersten Teils des CO aus dem CO₂-Konverter (4) in den Hochofenschacht (2); und
Leiten eines zweiten Teils des CO aus dem CO₂-Konverter (4) zu einem Weiterverarbeitungsprozess, wobei der Weiterverarbeitungsprozess einer oder mehrere der Folgenden Umwandlungsprozesse ist
- ein Oxidationsprozess in einer Brennstoffzelle oder ein Verbrennungsprozess in einem Gasmotor oder einer Gasturbine;
- ein biologischer Umwandlungsprozess in einem Biokonverter, bei dem unter Einsatz von Mikroben oder Algen nach eine oder mehrere der folgenden Netto-Gleichungen abläuft:
a) 6CO + 3H₂O → C₂H₅OH + 4CO₂;
b) 6H₂ + 2CO₂ → C₂H₅OH + 3H₂O;
c) 2CO + 4H₂ → C₂H₅OH + H₂O;
und
- ein Umwandlungsprozess, bei dem ein Synthesegas in einen funktionalisierten und/oder nicht-funktionalisierten Kohlenwasserstoff umgewandelt wird.

2. Prozess nach Anspruch 1, wobei der zweite Teil des CO aus dem CO₂-Konverter (4) zunächst zu einem CO₂ enthaltenden Abgasgemisch verbrannt wird, bevor es als dieses Abgasgemisch zu dem Weiterverarbeitungsprozess weitergeleitet wird.

3. Prozess nach Anspruch 1 oder 2, wobei das Gichtgas beim indirekten Leiten zum CO₂-Konverter (4) zunächst zu einem CO₂ enthaltenden Abgasgemisch verbrannt wird, bevor es als dieses Abgasgemisch zu dem CO₂-Konverter (4) weitergeleitet wird und in dem CO₂-Konverter (4) zu CO reduziert wird; und
welcher optional weiter den Schritt aufweist, einen Teil des CO₂ enthaltenden Abgasgemisches an dem CO₂-Konverter (4) vorbei zu dem Weiterverarbeitungsprozess zu leiten.

4. Prozess nach einem der vorhergehenden Ansprüche, wobei ein Teil des CO in einem unteren Bereich über dem Spiegel der Metallschmelze in den Hochofenschacht (2) eingeleitet wird.

5. Prozess nach einem der vorhergehenden Ansprüche, wobei ein Teil des CO an einer oder mehreren CO-Einleitungsstellen entlang des Hochofenschachtes (2) eingeleitet wird; und
wobei optional die CO-Einleitungsstellen teilweise unter dem Spiegel der Metallschmelze im Hochofenschacht (2) liegen.

6. Prozess nach Anspruch 1 der weiter folgende Schritte aufweist:
Aufspalten eines Kohlenwasserstoff enthaltenden Fluids zu Kohlenstoff und Wasserstoff
a) mithilfe eines Plasmas oder
b) durch Hinzufügen thermischer Energie; und
Zuführen des Wasserstoffes (H₂) zu dem biologischen Umwandlungsprozess direkt vom Kohlenwasserstoffkonverter (46) oder über den CO₂-Konverter (4),
wobei optional das Aufspalten des Kohlenwasserstoff enthaltenden Fluids in einem separaten Kohlenwasserstoffkonverter (46) ausgeführt wird.

7. Prozess nach Anspruch 1 wobei das Synthesegas durch folgende Schritte erzeugt wird:
Aufspalten eines Kohlenwasserstoff enthaltenden Fluids zu Kohlenstoff (C) und Wasserstoff (H₂)
a) mithilfe eines Plasmas oder
b) durch Hinzufügen thermischer Energie; und
Vermischen von wenigstens einem Teil des Wasserstoffes (H₂) mit wenigstens einem Teil des im CO₂-Konverter (4) erzeugten CO.

8. Hochofen (1) zur Metallgewinnung, der folgendes aufweist:
einen Hochofenschacht (2) mit einem ersten Gichtgasauslass (10) und wenigstens einem CO-Einlass (14);
einen CO₂-Konverter (4), der einen CO₂-Konvertereingang (20) und einen CO₂-Konvertergaseinlass (22) für CO₂-haltige Gase aufweist und zum Reduzieren von CO₂ zu CO geeignet ist;
wobei der erste Gichtgasauslass (10) direkt oder indirekt mit dem CO₂-Konvertergaseinlass (22) verbunden ist;
wobei der CO₂-Konverter (4) mindestens einen ersten CO-Auslass (24) zum Ableiten eines ersten Teils des im CO₂-Konverter (4) erzeugten CO aufweist, der direkt oder indirekt mit dem Hochofenschacht (2) verbunden ist; und
wobei der CO₂-Konverter (4) mindestens einen zweiten CO-Auslass (26) zum Ableiten eines zweiten Teils des CO zu einem oder mehreren der folgenden Weiterverarbeitungskonverter (6) aufweist,
- einem Weiterverarbeitungskonverter (6), der ein Gasmotor, eine Gasturbine oder eine Brennstoffzelle ist;
- einem Weiterverarbeitungskonverter (6), der ein Biokonverter ist, in dem ein Umwandlungsprozess unter Einsatz von Mikroben oder Algen nach einer oder mehreren der folgenden Netto-Gleichungen abläuft:
a) 6CO + 3H₂O → C₂H₅OH + 4CO₂;
b) 6H₂ + 2CO₂ → C₂H₅OH + 3H₂O;
c) 2CO + 4H₂ → C₂H₅OH + H₂O;
und
- einem Weiterverarbeitungskonverter (6), der geeignet ist, mithilfe eines Synthesegases funktionalisierte und/oder nicht-funktionalisierte Kohlenwasserstoffe herzustellen.

9. Hochofen (1) nach Anspruch 8, der eine Verbrennungsmaschine (36) mit einem Verbrennungsgaseinlass (38) und wenigstens einem Abgasauslass (40) zum Auslassen eines CO₂-haltigen Abgases aufweist;
wobei mindestens einer der zweiten CO-Auslässe (26) des CO₂-Konverters (4) mit dem Verbrennungsgaseinlass (38) der Verbrennungsmaschine (36) verbunden ist,
wobei die Verbrennungsmaschine (36) wenigstens teilweise mit CO aus dem CO₂-Konverter (4) betrieben wird; und
wobei einer der Abgasauslässe (40) der Verbrennungsmaschine (36) mit dem Weiterverarbeitungskonverter (6) verbunden ist.

10. Hochofen (1) nach einem der Ansprüche 8 oder 9, der eine Verbrennungsmaschine (36) mit einem Verbrennungsgaseinlass (38) und wenigstens einem Abgasauslass (40) zum Auslassen eines CO₂-haltigen Abgases aufweist;
wobei bei einer indirekten Verbindung von Gichtgasauslass (10) und CO₂-Konverter (4) der erste Gichtgasauslass (10) des Hochofenschachtes (2) mit dem Verbrennungsgaseinlass (38) der Verbrennungsmaschine (36) verbunden ist,
wobei die Verbrennungsmaschine (36) wenigstens teilweise mit Gichtgas betrieben wird; und wobei optional einer der Abgasauslässe (40) der Verbrennungsmaschine (36) mit dem CO₂-Konvertergaseinlass (22) des CO₂-Konverters (4) verbunden ist, um einen Teil des CO₂ enthaltenden Abgasgemisches zu dem CO₂-Konverter (4) zu leiten.

11. Hochofen (1) nach Anspruch 10, wobei einer der Abgasauslässe (40) der Verbrennungsmaschine (36) mit dem Weiterverarbeitungskonverter (6) verbunden ist, um einen Teil des CO₂ enthaltenden Abgasgemisches am CO₂-Konverter (4) vorbei zu einem Weiterverarbeitungsprozess im Weiterverarbeitungskonverter (6) zu leiten.

12. Hochofen (1) nach einem der Ansprüche 8 bis 11, der einen CO-Einlass (14) in einem unteren Bereich des Hochofenschachtes (2) über dem Spiegel der Metallschmelze aufweist.

13. Hochofen (1) nach einem der Ansprüche 8 bis 12, der mehrere CO-Einlässe (14) auf verschiedenen Höhen des Hochofenschachtes (2) aufweist; und
wobei optional die CO-Einlässe (14) teilweise auf einer Höhe gelegen sind, die im Betrieb des Hochofens (1) unter dem Spiegel der Metallschmelze im Hochofenschacht (2) liegt.

14. Hochofen (1) nach einem der Ansprüche 8 bis 13, der weiter einen mit Plasma oder mit thermischer Energie betriebenen Kohlenwasserstoffkonverter (46) mit wenigstens einem Kohlenwasserstoffeingang (48) für ein Kohlenwasserstoff enthaltendes Fluid sowie wenigstens einen Ausgang (50, 54, 50/52) für wenigstens Kohlenstoff aufweist; und
wobei wenigstens einer der Ausgänge (50, 54, 50/52) für wenigstens Kohlenstoff mit dem CO₂-Konvertereingang (20) verbunden ist.

15. Hochofen (1) nach einem der Ansprüche 8 bis 14, wobei der Kohlenwasserstoffkonverter (46) weiter wenigstens einen H₂-Ausgang (52) für Wasserstoff (H₂) aufweist; und
wobei optional einer der H₂-Ausgänge (52) für Wasserstoff (H₂) des Kohlenwasserstoffkonverters (46) mit dem Weiterverarbeitungskonverter (6) in Verbindung steht.

16. Hochofen (1) nach einem der Ansprüche 8, 10, 13, der weiter einen mit Plasma oder mit thermischer Energie betriebenen Kohlenwasserstoffkonverter (46) mit wenigstens einem Kohlenwasserstoffeingang (48) für ein Kohlenwasserstoff enthaltendes Fluid sowie wenigstens einem C-Ausgang (50, 54) für Kohlenstoff und wenigstens einem H₂-Ausgang (52) für Wasserstoff (H₂) aufweist; und
wobei wenigstens einer der H₂-Ausgänge (52) für Wasserstoff (H₂) mit dem CO₂-Konvertereingang (20) verbunden ist.

## Claims

1. Method for processing metal ore comprising the following steps:
reducing a metal ore;
producing furnace gas containing CO₂ in a blast furnace shaft (2);
discharging said furnace gas from the blast furnace shaft (2);
directing at least a portion of the furnace gas directly or indirectly into a CO₂ converter (4) and
reducing the CO₂ contained in the furnace gas to CO in the CO₂ converter (4);
directing a first portion of the CO from the CO₂ converter (4) into the blast furnace shaft (2);
and
directing a second portion of the CO from the CO₂ converter (4) into a further processing process, wherein the further processing process comprises one or more of the following
- an oxidation process in a fuel cell or a combustion process in a gas engine or in a gas turbine;
- a biological conversion process in a bio converter and is carried out using microbes or algae according to one or more of the following net equations:
a) 6 CO + 3 H₂O → C₂H₅OH + 4 CO₂;
b) 6 H₂ + 2 CO₂ → C₂H₅OH + 3 H₂O;
c) 2 CO + 4 H₂ → C₂H₅OH + H₂O;
and
- a conversion process converting synthesis gas into a functionalized and/or non-functionalized hydrocarbon.

2. Method according to claim 1, wherein the second portion of the CO coming from the CO₂ converter (4) is burnt so as to form an exhaust gas mixture containing CO₂ before it is directed to the further processing process as an exhaust gas mixture.

3. Method according to claims 1 or 2, wherein, in a case of indirectly directing the furnace gas into the CO₂ converter (4), said furnace gas is first burnt to produce an exhaust gas mixture containing CO₂ before it is directed into the CO₂ converter (4) in form of said exhaust gas mixture, and is reduced to CO in the CO₂ converter (4); and
which optionally comprises a step of directing a portion of the exhaust gas mixture containing CO₂ into the further processing process, bypassing said CO₂ converter (4).

4. Method according to one of the preceding claims, wherein a portion of the CO is fed into the blast furnace shaft (2) at a lower region thereof above the level of the molten metal.

5. Method according to one of the preceding claims, wherein a portion of the CO is fed into the blast furnace shaft (2) at one or more CO inlets located along the blast furnace shaft (2); and wherein optionally the CO inlets are partially located below the level of the molten metal in the blast furnace shaft (2).

6. Method according to claim 1, which further comprises the following steps:
decomposing a fluid containing hydrocarbons into carbon and hydrogen
a) by means of a plasma or
b) by introducing thermal energy; and
directing said hydrogen (H₂) into the biological conversion process directly from the hydrocarbon converter (46) or via the CO₂ converter (4);
wherein optionally the decomposing step is carried out in a separate hydrocarbon converter (46).

7. Method according to claim 1, wherein the synthesis gas is produced by the following steps:
decomposing a fluid containing hydrocarbons into carbon (C) and hydrogen (H₂)
a) by means of a plasma or
b) by introducing thermal energy; and
mixing at least a portion of the hydrogen (H₂) with at least a portion of the CO produced in the CO₂ converter (4).

8. Blast furnace (1) for metal production which comprises:
a blast furnace shaft (2) having a first furnace gas outlet (10) and at least one CO inlet (14);
a CO₂ converter (4), which comprises a CO₂ converter inlet (20) and a CO₂ converter gas inlet (22) for gases containing CO₂ and which is adapted to reduce CO₂ to CO;
wherein the first furnace gas outlet (10) is directly or indirectly connected to the CO₂ converter gas inlet (22); and
wherein the CO₂ converter (4) comprises at least one first CO outlet (24) for discharging a first portion of the CO produced in the CO₂ converter (4), wherein said first CO outlet (24) is directly or indirectly connected to the blast furnace shaft (2); and
wherein the CO₂ converter (4) comprises at least one second CO outlet (26) for discharging a second portion of the CO to one or more of the following further processing converters (6)
- a further processing converter (6) which is a gas engine, a gas turbine or a fuel cell;
- a further processing converter (6) which is a bio converter, in which a conversion process using microbes or algae is carried out according to one or more of the following net equations:
a) 6 CO + 3 H₂O → C₂H₅OH + 4 CO₂;
b) 6 H₂ + 2 CO₂ → C₂H₅OH + 3 H₂O;
c) 2 CO + 4 H₂ → C₂H₅OH + H₂O;
and
- a further processing converter (6) which is adapted to produce functionalized and/or non-functionalized hydrocarbons from a synthesis gas.

9. Blast furnace (1) according to claim 8, comprising a combustion machine (36) having a combustion gas inlet (38) and at least one exhaust gas outlet (40) for discharging exhaust gases containing CO₂;
wherein at least one of the second CO outlets (26) of the CO₂ converter (4) is connected to the combustion gas inlet (38) of the combustion machine (36);
wherein the combustion machine (36) is at least partially operated with CO from the CO₂ converter (4); and
wherein one of the exhaust gas outlets (40) of the combustion machine (36) is connected to the further processing converter (6).

10. Blast furnace (1) according to one of claims 8 or 9, which comprises a combustion machine (36) having a combustion gas inlet (38) and at least one exhaust gas outlet (40) for discharging exhaust gases containing CO₂;
wherein, in an indirect connection of the furnace gas outlet (10) and the CO₂ converter (4), the first furnace gas outlet (10) of the blast furnace shaft (2) is connected to the combustion gas inlet (38) of the combustion machine (36); and
wherein the combustion machine (36) is at least partially operated with furnace gas; and
wherein optionally one of the exhaust gas outlets (40) of the combustion machine (36) is connected to the CO₂ converter gas inlet (22) of the CO₂ converter (4) for directing a portion of the exhaust gas mixture containing CO₂ into the CO₂ converter (4).

11. Blast furnace (1) according to claim 10, wherein one of the exhaust gas outlets (40) of the combustion machine (36) is connected to the further processing converter (6) so as to direct a portion of the exhaust gas mixture containing CO₂ to a further processing process in the further processing converter (6), bypassing the CO₂ converter (4).

12. Blast furnace (1) according to one of claims 8 to 11, comprising a CO inlet (14) in a lower region of the blast furnace shaft (2) above the level of the molten metal.

13. Blast furnace (1) according to one of claims 8 to 12, which comprises a plurality of CO inlets (14) at different heights of the blast furnace shaft (2); and
wherein optionally the CO inlets (14) are partially located at a height which is below the level of the molten metal in the blast furnace shaft (2) during operation of the blast furnace (1).

14. Blast furnace (1) according to one of claims 8 to 13, which further comprises a hydrocarbon converter (46) operated by means of a plasma or by means of thermal energy, wherein the hydrocarbon converter (46) comprises at least one hydrocarbon inlet (48) for a fluid containing hydrocarbons as well as at least one outlet (50, 54, 50/52) for at least carbon; and
wherein at least one of the outlets (50, 54, 50/52) for at least carbon is connected to the CO₂ converter inlet (20).

15. Blast furnace (1) according to one of claims 8 to 14, wherein the hydrocarbon converter (46) comprises at least one H₂ outlet (52) for hydrogen (H₂); and
wherein optionally one of the H₂ outlets (52) for hydrogen (H₂) of the hydrocarbon converter (46) is connected to the further processing converter (6).

16. Blast furnace (1) according to one of claims 8, 10, 13, which further comprises a hydrocarbon converter (46) operated by means of a plasma or by means of thermal energy, the hydrocarbon converter (46) comprising at least one hydrocarbon inlet (48) for a fluid containing hydrocarbons and at least one C outlet (50, 54) for carbon and at least one H₂ outlet (52) for hydrogen (H₂); and
wherein at least one H₂ outlet (52) for hydrogen (H₂) is connected to the CO₂ converter inlet (20).

## Revendications

1. Procédé de traitementde minerai métallique comprenant les étapes suivantes :
réduire un minerai métallique ;
produire du gaz de four contenant du CO₂ dans une cuve de haut-fourneau (2) ;
évacuer du gaz de four de la cuve de haut-fourneau (2) ;
diriger au moins une portion du gaz de four directement ou indirectement vers un convertisseur de CO₂(4) et réduire le CO₂ contenu dans le gaz de four en CO dans le convertisseur de CO₂(4) ;
diriger une première portion du CO provenant du convertisseur de CO₂ (4) vers la cuve de haut-fourneau (2) ; et
diriger une deuxième portion du COprovenant du convertisseur de CO₂ (4) vers un autre processus de traitement, l'autre processus de traitement comprenant un ou plusieurs des processus suivants :
- un processus d'oxydation dans une pile à combustible ou un processus de combustion dans un moteur à gaz ou dans une turbine à gaz ;
- un processus de conversion biologique dans un bio-convertisseur réalisé en utilisant des microbes ou des algues selon une ou plusieurs des équations nettes suivantes :
a) 6 CO + 3 H₂O → C₂H₅OH + 4 CO₂ ;
b) 6 H₂ + 2 CO₂→ C₂H₅OH + 3 H₂O;
c) 2 CO + 4 H₂→ C₂H₅OH + H₂O;
et
- un processus de conversion convertissant du gaz de synthèse en un hydrocarbure fonctionnalisé et/ou non fonctionnalisé.

2. Procédé selon la revendication 1, dans lequel la deuxième portion du CO provenant du convertisseur de CO₂ (4) est brûlée de façon à former un mélange de gaz d'échappement contenant du CO₂ avant d'être dirigée vers l'autre processus de traitement en tant que mélange de gaz d'échappement.

3. Procédé selon les revendications 1 ou 2, dans lequel, dans le cas où l'on dirige indirectement le gaz de four dans le convertisseur de CO₂ (4), le gaz de four est d'abord brûlé pour produire un mélange de gaz d'échappement contenant du CO₂ avant d'être dirigé vers le convertisseur de CO₂ (4) sous forme du mélange de gaz d'échappement, et est réduit en CO dans le convertisseur de CO₂ (4); et
comprenant optionnellement une étape consistant à diriger une portion du mélange de gaz d'échappement contenant du CO₂ vers l'autre processus de traitement, en contournant le convertisseur de CO₂ (4).

4. Procédé selon l'une quelconque des revendications précédentes, dans lequel une portion du CO est fournie dans la cuve de haut-fourneau (2) au niveau d'une région inférieure au-dessus du niveau du métal en fusion.

5. Procédé selon l'une quelconque des revendications précédentes, dans lequel une portion du CO est fournie dans la cuve de haut-fourneau (2) au niveau d'une ou plusieurs entrées de CO situées le long de la cuve de haut-fourneau (2) ; et
dans lequel optionnellement les entrées de CO sont partiellement situées en dessous du niveau du métal en fusion dans la cuve de haut-fourneau (2).

6. Procédé selon la revendication 1, comprenant en outre les étapes suivantes :
décomposer un fluide contenant des hydrocarbures en carbone et en hydrogène
a) au moyen d'un plasma, ou
b) en introduisant de l'énergie thermique ; et
diriger l'hydrogène (H₂) vers le processus de conversion biologique directement à partir du convertisseur d'hydrocarbures (46) ou par l'intermédiaire du convertisseur de CO₂ (4) ;
dans lequel optionnellement l'étape de décomposition est réalisée dans un convertisseur d'hydrocarbures (46) séparé.

7. Procédé selon la revendication 1, dans lequel le gaz de synthèse est produit par les étapes suivantes :
décomposerun fluide contenant des hydrocarbures en carbone (C) et en hydrogène (H₂)
a) au moyen d'un plasma, ou
b) en introduisant de l'énergie thermique ; et
mélanger au moins une portion de l'hydrogène (H₂) avec au moins une portion du CO produit dans le convertisseur de CO₂ (4).

8. Haut-fourneau(1) pour la production de métal, comprenant :
une cuve de haut-fourneau (2) comportant une première sortie de gaz de four (10) et au moins une entrée de CO (14) ;
un convertisseur de CO₂ (4), qui comprend une entrée de convertisseur de CO₂ (20) et une entrée de gaz de convertisseur de CO₂ (22) pour des gaz contenant du CO₂, et qui est adapté à réduire du CO₂ en CO ;
dans lequel la première sortie de gaz de four (10) est directement ou indirectement connectée à l'entrée de gaz de convertisseur de CO₂ (22) ; et
dans lequel le convertisseur de CO₂ (4) comprend au moins une première sortie de CO (24) pour évacuer une première portion du CO produit dans le convertisseur de CO₂ (4), la première sortie de CO (24) étant directement ou indirectement connectée à la cuve de haut-fourneau (2) ; et
dans lequel le convertisseur de CO₂ (4) comprend au moins une deuxième sortie de CO (26) pour évacuer une deuxième portion du CO vers un ou plusieurs des autres convertisseurs de traitement (6) suivantes :
- un autre convertisseur de traitement (6) qui est un moteur à gaz, une turbine à gaz ou une pile à combustible ;
- un autre convertisseur de traitement (6) qui est un bio-convertisseur, dans lequel un processus de conversion utilisant des microbes ou des algues est réalisé selon une ou plusieurs des équations nettes suivantes :
a) 6 CO + 3 H₂O → C₂H₅OH + 4 CO₂ ;
b) 6 H₂ + 2 CO₂→ C₂H₅OH + 3 H₂O ;
c) 2 CO + 4 H₂→ C₂H₅OH + H₂O ;
et
- un autre convertisseur de traitement (6) qui est adapté à produire des hydrocarbures fonctionnalisés et/ou non fonctionnalisés à partir d'un gaz de synthèse.

9. Haut-fourneau(1) selon la revendication 8, comprenant une machine de combustion (36) comportant une entrée de gaz de combustion (38) et au moins une sortie de gaz d'échappement (40) pour évacuer des gaz d'échappement contenant du CO₂ ;
dans lequel au moins l'une des deuxièmes sorties de CO (26) du convertisseur de CO₂ (4) est connectée à l'entrée de gaz de combustion (38) de la machine de combustion (36) ;
dans lequel la machine de combustion (36) est au moins partiellement actionnée avec du CO provenant du convertisseur de CO₂ (4) ; et
dans lequel l'une des sorties de gaz d'échappement (40) de la machine de combustion (36) est connectée à l'autre convertisseur de traitement (6).

10. Haut-fourneau(1) selon l'une quelconque des revendications 8 ou 9, comprenant une machine de combustion (36) comportant une entrée de gaz de combustion (38) et au moins une sortie de gaz d'échappement (40) pour évacuer des gaz d'échappement contenant du CO₂ ;
dans lequel, dans une connexion indirecte de la sortie de gaz de four (10) et du convertisseur de CO₂ (4), la première sortie de gaz de four (10) de la cuve de haut-fourneau (2) est connectée à l'entrée de gaz de combustion (38) de la machine de combustion (36) ; et
dans lequel la machine de combustion (36) est au moins partiellement actionnéeavec du gaz de four ; et
dans lequel optionnellement l'une des sorties de gaz d'échappement (40) de la machine de combustion (36) est connectée à l'entrée de gaz de convertisseur de CO₂ (22) du convertisseur de CO₂ (4) pour diriger une portion du mélange de gaz d'échappement contenant du CO₂ vers le convertisseur de CO₂ (4).

11. Haut-fourneau(1) selon la revendication 10, dans lequel l'une des sorties de gaz d'échappement (40) de la machine de combustion (36) est connectée à l'autre convertisseur de traitement (6) de façon à diriger une portion du mélange de gaz d'échappement contenant du CO₂ vers un autre processus de traitement dans l'autre convertisseur de traitement (6), en contournant le convertisseur de CO₂ (4).

12. Haut-fourneau(1) selon l'une quelconque des revendications 8 à 11, comprenant une entrée de CO (14) dans une région inférieure de la cuve de haut-fourneau (2) au-dessus du niveau du métal en fusion.

13. Haut-fourneau(1) selon l'une quelconque des revendications 8 à 12, comprenant une pluralité d'entrées de CO (14) à différentes hauteurs de la cuve de haut-fourneau (2) ; et
dans lequel optionnellement les entrées de CO (14) sont partiellement situées à une hauteur qui est en dessous du niveau du métal en fusion dans la cuve de haut-fourneau (2) pendant le fonctionnement du haut-fourneau (1).

14. Haut-fourneau (1) selon l'une quelconque des revendications 8 à 13, comprenant en outre un convertisseur d'hydrocarbures (46) actionné au moyen d'un plasma ou au moyen d'énergie thermique, dans lequel le convertisseur d'hydrocarbures (46) comprend au moins une entrée d'hydrocarbures (48) pour du fluide contenant des hydrocarbures ainsi qu'au moins une sortie (50, 54, 50/52) pour au moins du carbone ; et
dans lequel au moins l'une des sorties (50, 54, 50/52) pour au moins du carbone est connectée à l'entrée du convertisseur de CO₂ (20).

15. Haut-fourneau(1) selon l'une quelconque des revendications 8 à 14, dans lequel le convertisseur d'hydrocarbures (46) comprend au moins une sortie de H₂ (52) pour de l'hydrogène (H₂) ; et
dans lequel optionnellement l'une des sorties de H₂ (52) pour de l'hydrogène (H₂) du convertisseur d'hydrocarbures (46) est connectée à l'autre convertisseur de traitement (6).

16. Haut-fourneau (1) selon l'une quelconque des revendications 8, 10, 13, comprenant en outre un convertisseur d'hydrocarbures (46) actionné au moyen d'un plasma au moyen d'énergie thermique, le convertisseur d'hydrocarbures (46) comprenant au moins une entrée d'hydrocarbures (48) pour un fluide contenant des hydrocarbures et au moins une sortie de C (50, 54) pour du carbone et au moins une sortie de H₂ (52) pour de l'hydrogène (H₂) ; et
dans lequel au moins une sortie de H₂ (52) pour de l'hydrogène (H₂) est connectée à l'entrée de convertisseur de CO₂ (20).
